# EUROPEAN PATENT APPLICATION

(11) **EP 4 564 263 A1**
(43) Date of publication of application: **04.06.2025**
(21) Application number: 24216017.4
(22) Date of filing: 28.11.2024
(51) Int. Cl.: G06Q 10/30, B02C 18/00, B02C 25/00, D21B 1/08, D21B 1/32

(54) **METHOD OF MANAGING WASTE PAPER RECYCLING INFORMATION AND WASTE PAPER RECYCLING SYSTEM**

(30) Priority: 30.11.2023 JP 2023202529
(71) Applicant: Seiko Epson Corporation, Tokyo 160-8801 (JP)
(72) Inventor: TSUGE, Keishi, Suwa-shi, 392-8502 (JP); KUROGI, Junpei, Suwa-shi, 392-8502 (JP); YAMANAKA, Tsuyoshi, Suwa-shi, 392-8502 (JP)
(74) Representative: Lewis Silkin LLP

(57) **Abstract**

Provided is a method of managing waste paper recycling information in a waste paper recycling system. The waste paper recycling system includes a management server, a waste paper recycling apparatus, and a shredder. The shredder measures an amount of paper fragments produced when shredding waste paper, and transmits this paper fragment amount to the management server. The waste paper recycling apparatus recycles the paper fragments produced by the shredder into each sheet, measures an amount of the sheets produced through the recycling, and transmits this produced amount of the sheets to the management server. The management server receives the paper fragment amount and the produced amount. Based on at least one of the paper fragment amount or the produced amount, the management server generates user notification information. The management server transmits the user notification information.

## Description

The present application is based on, and claims priority from JP Application Serial Number 2023-202529, filed November 30, 2023, the disclosure of which is hereby incorporated by reference herein in its entirety.

### BACKGROUND

### 1. Technical Field

The present disclosure relates to a method of managing waste paper recycling information and a waste paper recycling system.

### 2. Related Art

A sheet manufacturing system that recycles waste paper is known. A sheet manufacturing system disclosed in JP-A-2018-168492 includes a first apparatus, a second apparatus, and an analyzing server. The first apparatus is a coarse-crushing-and-defibrating apparatus that performs coarse crushing, etc. of waste paper. The second apparatus is a sheet manufacturing apparatus that manufactures sheets. The analyzing server gathers information about the operation history of the first apparatus and the second apparatus, and stores the gathered information. Based on the information gathered by the analyzing server, the administrator of the analyzing server judges whether the deployment of the first apparatus and the second apparatus is proper or not.

These days, with increased social environmental awareness and development in system formulation related to environmental activities such as a carbon credit system, there are needs to quantitatively grasp how much a user contributes to the environment through the recycling of waste paper. However, the sheet manufacturing system according to related art does not have a scheme for proving a solution to these needs.

### SUMMARY

A method of managing waste paper recycling information according to a certain aspect of the present disclosure is a method of managing waste paper recycling information in a waste paper recycling system. The waste paper recycling system includes a management server, a waste paper recycling apparatus, and a shredder. The shredder measures an amount of paper fragments produced when shredding waste paper, and transmits this paper fragment amount to the management server. The waste paper recycling apparatus recycles the paper fragments produced by the shredder into each sheet, measures an amount of the sheets produced through the recycling, and transmits this produced amount of the sheets to the management server. The management server receives the paper fragment amount and the produced amount. Based on at least one of the paper fragment amount or the produced amount, the management server generates user notification information. The management server transmits the user notification information.

A waste paper recycling system according to a certain aspect of the present disclosure is a waste paper recycling system that includes a management server, a waste paper recycling apparatus communicably connected to the management server via a network, and a shredder connected to the management server via the network. The shredder includes a shredding unit that produces a plurality of paper fragments by shredding waste paper, a measuring sensor that measures an amount of the plurality of paper fragments, and a first communication unit that transmits this paper fragment amount to the management server. The waste paper recycling apparatus includes a paper manufacturing unit that recycles the plurality of paper fragments produced by the shredder into each sheet, a counter that measures a produced amount of the sheets, and a second communication unit that transmits the produced amount to the management server. The management server includes a third communication unit that receives the paper fragment amount and the produced amount, and a control unit that, based on at least one of the paper fragment amount or the produced amount, generates user notification information. The third communication unit transmits the user notification information to at least one of the first communication unit or the second communication unit.

### BRIEF DESCRIPTION OF THE DRAWINGS

FIG. 1 is a diagram illustrating a schematic configuration of a waste paper recycling system.
FIG. 2 is a diagram illustrating a schematic configuration of a sheet manufacturing apparatus.
FIG. 3 is a diagram illustrating an external appearance of a waste paper shredder.
FIG. 4 is a diagram illustrating a schematic configuration of the waste paper shredder.
FIG. 5 is a diagram illustrating a block configuration of the waste paper recycling system.
FIG. 6 is a diagram illustrating a control flow of the waste paper recycling system.
FIG. 7 is a diagram illustrating an example of display on an apparatus display.
FIG. 8 is a diagram illustrating an example of display on the apparatus display.
FIG. 9 is a diagram illustrating an example of display on a shredder display panel.
FIG. 10 is a diagram illustrating an example of display on the shredder display panel.
FIG. 11 is a diagram illustrating an example of display on a terminal display unit.
FIG. 12 is a diagram illustrating a control flow of the waste paper recycling system.
FIG. 13 is a diagram illustrating an example of display on the shredder display panel.
FIG. 14 is a diagram illustrating an example of display on the terminal display unit.

### DESCRIPTION OF EMBODIMENTS

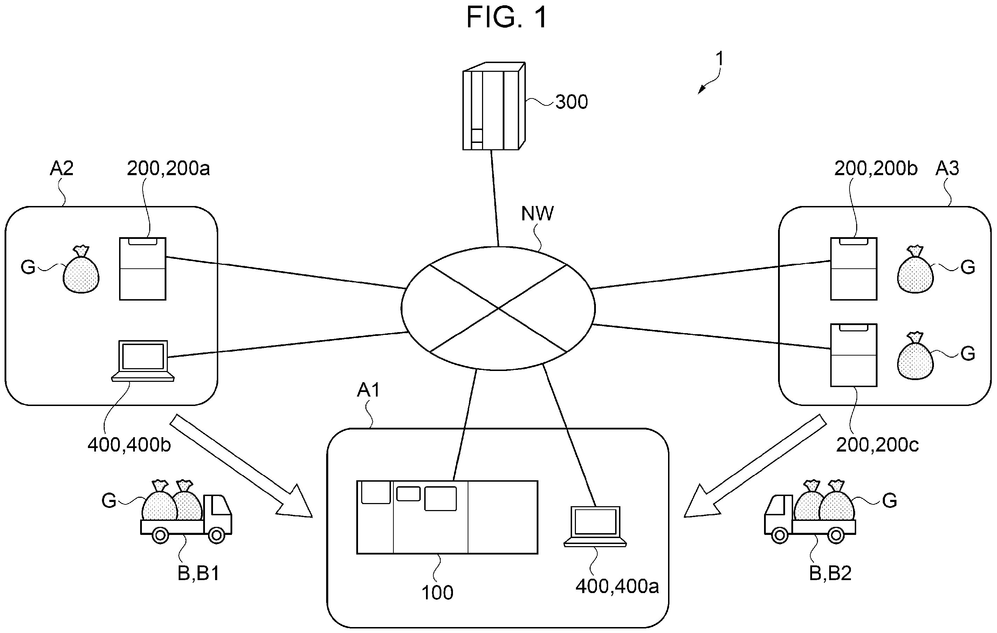

FIG. 1 is a diagram illustrating a schematic configuration of a waste paper recycling system 1. The waste paper recycling system 1 includes a sheet manufacturing apparatus 100, a waste paper shredder 200, and a waste paper recycling management server 300. The waste paper recycling system 1 may include a terminal device 400. The waste paper recycling system 1 may include a plurality of sheet manufacturing apparatuses 100, a plurality of waste paper shredders 200, and a plurality of terminal devices 400. The sheet manufacturing apparatus 100, the waste paper shredder 200, the waste paper recycling management server 300, and the terminal device 400 are communicably connected to one another via a communication network NW. The communication network NW corresponds to an example of a network.

The sheet manufacturing apparatuses 100 and the waste paper shredders 200 that are included in the waste paper recycling system 1 are deployed in a distributed manner, for example, across a plurality of enterprises. The waste paper recycling management server 300 is managed by an administrator of the waste paper recycling system 1. The terminal devices 400 are deployed at enterprises where the sheet manufacturing apparatuses 100 are deployed and at enterprises where the waste paper shredders 200 are deployed.

The waste paper recycling system 1 illustrated in FIG. 1 is, for example, a system constructed across a plurality of enterprises. The plurality of enterprises includes a first enterprise A1, a second enterprise A2, and a third enterprise A3. The first enterprise A1 owns the sheet manufacturing apparatus 100 and a first terminal device 400a. The second enterprise A2 owns a first waste paper shredder 200a and a second terminal device 400b. The third enterprise A3 owns a second waste paper shredder 200b and a third waste paper shredder 200c. The first waste paper shredder 200a, the second waste paper shredder 200b, and the third waste paper shredder 200c are included in the plurality of waste paper shredders 200. The first terminal device 400a and the second terminal device 400b are included in the plurality of terminal devices 400.

The waste paper recycling system 1 illustrated in FIG. 1 functions by participation of the first enterprise A1, the second enterprise A2, the third enterprise A3, and the administrator in it. The first enterprise A1, the second enterprise A2, the third enterprise A3, and the administrator conduct environmental improvement activities using the waste paper recycling system 1.

The entity involved in the environmental improvement activities using the waste paper recycling system 1 is not limited to the three enterprises. The environmental improvement activities are conducted by one or more enterprises. The entity involved in the environmental improvement activities using the waste paper recycling system 1 is not limited to an enterprise(s). The entity involved in the environmental improvement activities may be a school(s), an administrative institution(s), or a combination of a school(s), an administrative institution(s), and an enterprise(s). The apparatuses/devices that are included in the waste paper recycling system 1 may be deployed in a distributed manner across a plurality of business facilities and/or offices that belong to a single enterprise. The entity involved in the environmental improvement activities using the waste paper recycling system 1 is set as appropriate.

The sheet manufacturing apparatus 100 reproduces a sheet P by using fragments of paper C as a raw material. Specifically, the sheet manufacturing apparatus 100 manufactures a sheet P by using fragments of paper C produced by the waste paper shredder 200 as a raw material, thereby recycling the fragments of paper C into the sheet P. The sheet manufacturing apparatus 100 is communicably connected to the waste paper recycling management server 300 via the communication network NW. The sheet manufacturing apparatus 100 corresponds to an example of a waste paper recycling apparatus.

The waste paper shredder 200 shreds waste paper. The waste paper shredder 200 produces a plurality of fragments of paper C by shredding waste paper. The produced fragments of paper C are collected into a collection bag G. The waste paper shredder 200 is communicably connected to the waste paper recycling management server 300 via the communication network NW. The waste paper shredder 200 corresponds to an example of a shredder.

The first waste paper shredder 200a, the second waste paper shredder 200b, and the third waste paper shredder 200c that are included in the plurality of waste paper shredders 200 each shred waste paper to produce a plurality of fragments of paper C. The first waste paper shredder 200a, the second waste paper shredder 200b, and the third waste paper shredder 200c may include the same shredding mechanism, or shredding mechanisms different from one another. The configuration of the first waste paper shredder 200a, the second waste paper shredder 200b, and the third waste paper shredder 200c is not specifically limited as long as they are configured to be able to transmit various kinds of information to the waste paper recycling management server 300 via the communication network NW. The various kinds of information include an amount of the plurality of fragments of paper C produced by the waste paper shredder 200.

The waste paper recycling management server 300 performs various kinds of data processing. The waste paper recycling management server 300 is communicably connected to the waste paper shredder 200 and the sheet manufacturing apparatus 100 via the communication network NW. The waste paper recycling management server 300 receives various kinds of information from the waste paper shredder 200 and the sheet manufacturing apparatus 100. The waste paper recycling management server 300 may be communicably connected to the terminal device 400 via the communication network NW. The waste paper recycling management server 300 conducts an analysis using various kinds of information. The waste paper recycling management server 300 generates environment-related information as the result of the analysis. The environment-related information will be described later. The waste paper recycling management server 300 transmits the result of the analysis to the waste paper shredder 200 and the sheet manufacturing apparatus 100. The waste paper recycling management server 300 may transmit the result of the analysis to the terminal device 400. The waste paper recycling management server 300 corresponds to an example of a management server.

The waste paper recycling management server 300 manages various kinds of information received from the waste paper shredder 200 and the sheet manufacturing apparatus 100. The waste paper recycling management server 300 manages the result of the analysis obtained by conducting the analysis using the various kinds of information. The waste paper recycling management server 300 manages the various kinds of information and the result of the analysis as system-related information. The system-related information includes the environment-related information. The waste paper recycling system 1 is administered on the basis of the system-related information. The waste paper recycling management server 300 performs storing, processing, distribution, deletion, etc. of various kinds of management data included in the system-related information.

The terminal device 400 displays various kinds of information. The terminal device 400 is a notebook personal computer, a desktop personal computer, a tablet terminal, a smartphone, or the like. The terminal device 400 displays various kinds of information by running an application. The application may be a web application that operates on a web browser, or a dedicated application. By displaying various kinds of information, the terminal device 400 notifies the user of the waste paper shredder 200, the user of the sheet manufacturing apparatus 100, or the like the various kinds of information. The terminal device 400 corresponds to an example of a communication terminal.

Each of the first terminal device 400a and the second terminal device 400b that are included in the plurality of terminal devices 400 displays various kinds of information. On the first terminal device 400a and the second terminal device 400b, the various kinds of information are displayed by the running of the same application. The same information may be displayed on each of the first terminal device 400a and the second terminal device 400b, or different information may be displayed thereon.

The collection bag G stores the plurality of fragments of paper C produced by the waste paper shredder 200 in a transportable manner. The collection bag G stores the fragments of paper C the amount of which is measured by a mass sensor 229 provided in the waste paper shredder 200. The mass sensor 229 will be described later. The user of the waste paper shredder 200 may transfer the plurality of fragments of paper C produced by the waste paper shredder 200 from a container box 223 into the collection bag G. The user of the waste paper shredder 200 may attach the collection bag G to the container box 223 so as to cause the waste paper shredder 200 to put the plurality of fragments of paper C into the collection bag G directly. The collection bag G containing the plurality of fragments of paper C is transported by a transportation service provider B.

The transportation service provider B transports the collection bag G containing the plurality of fragments of paper C to the first enterprise A1. The first enterprise A1 owns the sheet manufacturing apparatus 100. In the waste paper recycling system 1 illustrated in FIG. 1, each of a first transportation service provider B1 and a second transportation service provider B2 transports the collection bags G to the first enterprise A1. The first transportation service provider B1 transports the collection bags G of the second enterprise A2 to the first enterprise A1. The second transportation service provider B2 transports the collection bags G of the third enterprise A3 to the first enterprise A1. Through the transportation by the first transportation service provider B1, the first enterprise A1 acquires the collection bags G of the second enterprise A2. Through the transportation by the second transportation service provider B2, the first enterprise A1 acquires the collection bags G of the third enterprise A3. The sheet manufacturing apparatus 100 of the first enterprise A1 reproduces the sheet P by using the plurality of fragments of paper C contained in the acquired collection bag G.

In the waste paper recycling system 1 illustrated in FIG. 1, the first transportation service provider B1 and the second transportation service provider B2 transport the collection bags G to the first enterprise A1. However, this does not imply any limitation. Either the first transportation service provider B1 or the second transportation service provider B2 may transport the collection bags G of the second enterprise A2 and the collection bags G of the third enterprise A3 to the first enterprise A1. The mode of transportation of the collection bags G is set as appropriate.

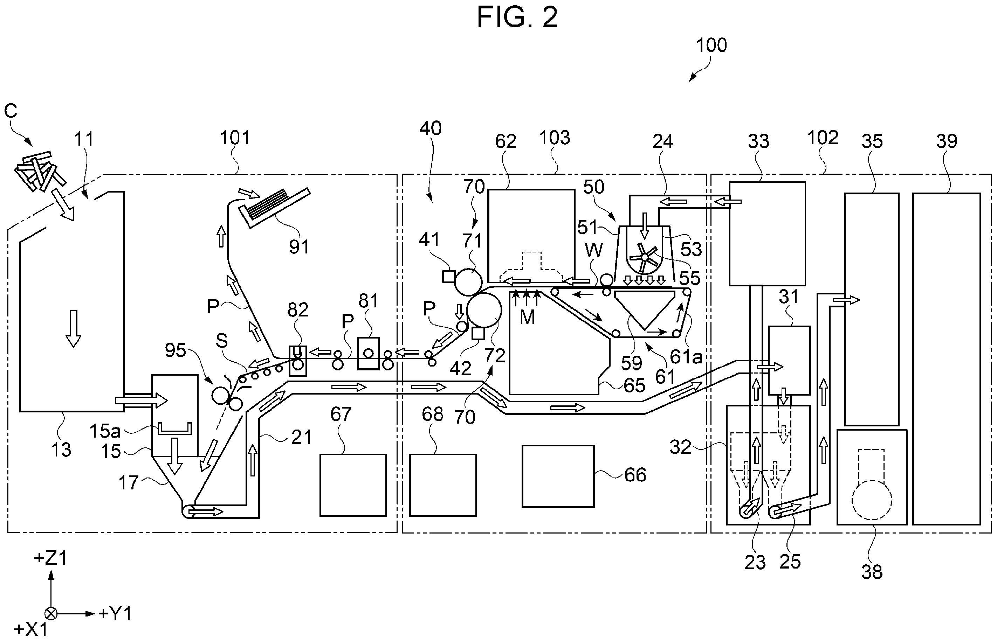

FIG. 2 is a diagram illustrating a schematic configuration of the sheet manufacturing apparatus 100. The sheet manufacturing apparatus 100 recycles the fragments of paper C such as waste paper into a sheet by using a dry method. The method used by the sheet manufacturing apparatuses 100 is not limited to a dry method. A wet method may be used. The dry method mentioned here means a method of performing sheet reproduction under atmospheric conditions, for example, in air, instead of reproducing the sheet P in a liquid.

In FIG. 2, coordinate axes that are orthogonal to one another are denoted as an X1 axis, a Y1 axis, and a Z1 axis respectively. The direction pointed to by the corresponding arrow of each of these axes is defined as "+ direction", and the direction that is the opposite of the + direction is defined as "- direction". The Z1 axis is a virtual axis extending in a vertical direction, where the +Z1 direction means "vertically upward", and the -Z1 direction means "vertically downward". The -Z1 direction is a direction in which the gravity acts. The side toward which a raw material, a web W, the sheet P, and the like are transported inside the sheet manufacturing apparatus 100 will be sometimes hereafter referred to as "downstream", and the opposite side against this transportation direction will be sometimes hereafter referred to as "upstream". For convenience of illustration, each member is not drawn to scale.

The sheet manufacturing apparatus 100 includes a first unit group 101, a second unit group 102, and a third unit group 103. The first unit group 101, the second unit group 102, and the third unit group 103 are supported by frames that are not illustrated. In Fig. 2, the direction in which the fragments of paper C, the sheet P, slit strips S, unwanted remnants, and the like move is indicated by empty arrows.

The sheet manufacturing apparatus 100 reproduces the sheet P from the fragments of paper C. In the sheet manufacturing apparatuses 100, the first unit group 101, the third unit group 103, and the second unit group 102 are disposed in this order from the -Y1 directional side toward the +Y1 directional side in a side view taken from the -X1 directional side.

The fragments of paper C are sent from the first unit group 101 to the second unit group 102 through a first pipe 21 extending across the inside of the third unit group 103. The fragments of paper C turn into fibers by undergoing a defibration process and the like at the second unit group 102, and thereafter turn into a mixture containing a binder and the like. The mixture is sent to the third unit group 103 through a third pipe 24. The mixture is formed into the web W at the third unit group 103, and is thereafter formed into a band-shaped sheet P. The band-shaped sheet P is cut at the first unit group 101 and thus turns into the sheet P.

The first unit group 101 includes a buffer tank 13, a fixed amount supplying unit 15, a merging unit 17, and the first pipe 21. In the first unit group 101, the buffer tank 13, the fixed amount supplying unit 15, the merging unit 17, and the first pipe 21 are disposed in this order from the upstream side toward the downstream side. The first unit group 101 includes a first cutting unit 81, a second cutting unit 82, a tray 91, and a crushing unit 95. The first cutting unit 81 and the second cutting unit 82 cut the band-shaped sheet P into the sheet P having a predetermined shape. The first unit group 101 further includes a water supply unit 67. An example of the water supply unit 67 is a reservoir tank. The water supply unit 67 supplies humidifying water to each of a first humidifying unit 65 and a second humidifying unit 66, which will be described later, through non-illustrated water supply pipes.

The fragments of paper C are fed into the buffer tank 13 through a raw material feed port 11. The fragments of paper C contain fibers such as cellulose, and are, for example, shredded pieces of waste paper. Humidified air is supplied to the inside of the buffer tank 13 from the second humidifying unit 66 provided in the third unit group 103.

The fragments of paper C that are to be defibrated are temporarily stored in the buffer tank 13, and are thereafter sent to the fixed amount supplying unit 15 in accordance with the running of the sheet manufacturing apparatus 100. The sheet manufacturing apparatus 100 may include a shredding mechanism that shreds the fragments of paper C or the like upstream of the buffer tank 13.

The fixed amount supplying unit 15 includes a weighing device 15a and a non-illustrated supply mechanism. The weighing device 15a measures the mass of the fragments of paper C. The supply mechanism supplies the fragments of paper C having been weighed by the weighing device 15a to the merging unit 17 disposed downstream thereof. The fixed amount supplying unit 15 weighs the fragments of paper C into a predetermined mass by using the weighing device 15a, and supplies the predetermined mass of the fragments of paper C to the merging unit 17 disposed downstream thereof by using the supply mechanism.

A digital weighing mechanism and an analog weighing mechanism can be applied to the weighing device 15a. A physical sensor such as a load cell, and a device such as a spring balance, a pair of scales, and the like, can be used as the weighing device 15a. A load cell may be used as a preferred non-limiting example of the weighing device 15a. The predetermined mass into which the fragments of paper C are weighed by the weighing device 15a is, for example, several grams to several tens of grams or so.

Known technology such as a vibrating feeder can be applied to the supply mechanism. The supply mechanism may be included in the weighing device 15a.

The weighing and supplying of the fragments of paper C at the fixed amount supplying unit 15 is batch processing. The fragments of paper C are supplied from the fixed amount supplying unit 15 to the merging unit 17 intermittently. The fixed amount supplying unit 15 may include a plurality of weighing devices 15a. If the plurality of weighing devices 15a operates with predetermined time differences therebetween, weighing efficiency improves.

At the merging unit 17, fragments of the slit strips S supplied from the crushing unit 95 merge with, and are mixed with, the fragments of paper C supplied from the fixed amount supplying unit 15. The slit strips S and the crushing unit 95 will be described later. The fragments of paper C having been mixed with the slit fragments flow into the first pipe 21 from the merging unit 17.

The fragments of paper C are sent from the first unit group 101 to the second unit group 102 through the first pipe 21 by an airflow produced by a non-illustrated blower.

The second unit group 102 includes a defibrating unit 31 that is a dry defibrator, a separating unit 32, a second pipe 23, a mixing unit 33, and the third pipe 24. In the second unit group 102, the defibrating unit 31, the separating unit 32, the second pipe 23, the mixing unit 33, and the third pipe 24 are disposed in this order from the upstream side toward the downstream side. The second unit group 102 includes a fourth pipe 25 connected to the separating unit 32, a collecting unit 35, a compressor 38, and a power unit 39.

The fragments of paper C having been sent through the first pipe 21 flow into the defibrating unit 31. The defibrating unit 31 performs dry defibration to turn the fragments of paper C having been supplied from the fixed amount supplying unit 15 into fibers. A known defibrating mechanism can be applied to the defibrating unit 31.

The defibrating unit 31 includes, for example, a stator and a rotor. The stator has a substantially cylindrical inner surface. The rotor is disposed inside the stator, and rotates along the inner surface of the stator. The fragments of paper C are put between the inner surface of the stator and the rotor. The fragments of paper C are defibrated by a sheer force produced between the inner surface of the stator and the rotor. Entangled fibers included in the fragments of paper C become disentangled at the defibrating unit 31. The fibers included in the fragments of paper C are sent to the separating unit 32.

The separating unit 32 sorts the defibrated fibers. The separating unit 32 removes, from the fibers, ingredients that are not needed for manufacturing the sheet P. The separating unit 32 sorts the fibers into those that are relatively long and those that are relatively short. Fibers that are relatively short could sometimes cause a decrease in the strength of the sheet P. The separating unit 32 screens out fibers that are relatively short. The separating unit 32 screens out a colorant, an additive, and the like included in the fragments of paper C. Known technology such as a disc mesh scheme can be applied to the separating unit 32.

Humidified air is supplied to the inside of the separating unit 32 from the second humidifying unit 66 of the third unit group 103.

The fibers after the removal of those that are relatively short are sent to the mixing unit 33 through the second pipe 23. Unwanted ingredients such as the fibers that are relatively short, the colorant, and the like are discharged to the collecting unit 35 through the fourth pipe 25.

The mixing unit 33 produces a mixture by mixing a binder and the like into the fibers in air. The mixing unit 33 includes a flow passage through which the fibers are sent, a fan, a hopper, a supply duct, and a valve. The flow passage, the fan, the hopper, the supply duct, and the valve are not illustrated.

The hopper is in communication with the flow passage of the fibers through the supply duct. The valve is provided in the supply duct between the hopper and the flow passage. The hopper supplies the binder such as starch into the flow passage. The valve adjusts the mass of the binder supplied from the hopper into the flow passage. The mixing ratio of the fibers and the binder is adjusted using the valve.

The mixing unit 33 may have a configuration of supplying a material other than the binder. For example, the mixing unit 33 may have a configuration of supplying a colorant, an additive, or the like.

The fan of the mixing unit 33 produces an airflow. The mixing unit 33 produces a mixture by mixing the binder and the like into the fibers in air while sending the fibers downstream by using the airflow produced by the fan. The mixture flows into the third pipe 24 from the mixing unit 33.

The collecting unit 35 includes a non-illustrated filter. The filter traps the unwanted ingredients such as the relatively short fibers coming in by being transported by the air flowing in the fourth pipe 25.

The compressor 38 produces compressed air. It could happen that the filter of the collecting unit 35 becomes clogged by fine particles or the like included in the unwanted ingredients. In such a case, it is possible to clean the filter by blowing the particles away by applying the compressed air produced by the compressor 38 to the filter.

The power unit 39 includes a power supply device that supplies power to each component of the sheet manufacturing apparatus 100. The power supply device is not illustrated. The power unit 39 distributes, to each component of the sheet manufacturing apparatus 100, power supplied from the outside.

The third unit group 103 causes the mixture containing the fibers having been produced from the fragments of paper C to pile up, thereby producing an accumulation of the mixture, and presses the accumulation of the mixture, thereby reproducing the band-shaped sheet P that is recycled paper. The third unit group 103 includes an accumulating unit 50, a first transporting unit 61, a second transporting unit 62, the first humidifying unit 65, the second humidifying unit 66, a drainage unit 68, a molding unit 70, and a cleaning device 40. The third unit group 103 corresponds to an example of a paper manufacturing unit.

In the third unit group 103, the accumulating unit 50, the first transporting unit 61, the second transporting unit 62, the first humidifying unit 65, the molding unit 70, and the cleaning device 40 are disposed in this order from the upstream side toward the downstream side. The second humidifying unit 66 is disposed under the first humidifying unit 65.

The accumulating unit 50 forms the web W by letting the mixture containing the sorted fibers fall in air to pile up. The accumulating unit 50 includes a drum member 53, a blade member 55 provided inside the drum member 53, a housing 51 in which the drum member 53 is housed, and a suction unit 59. The mixture is taken into the drum member 53 from the third pipe 24.

The first transporting unit 61 is disposed under the accumulating unit 50. The first transporting unit 61 includes a mesh belt 61a, and five tensioning rollers on and around which the mesh belt 61a is tensioned. The suction unit 59 faces the drum member 53, with the mesh belt 61a interposed therebetween, along the Z1 axis.

The blade member 55 is disposed inside the drum member 53. The blade member 55 is driven to rotate by a non-illustrated motor. The drum member 53 is a semi-cylindrical sieve. A net that has a sieve function is provided at the lower surface of the drum member 53. The drum member 53 allows fibers, mixture particles, etc. that are each smaller than the mesh of the net of the sieve to pass from the inside to the outside of the drum member 53.

The mixture is agitated by the blade member 55 rotating inside the drum member 53, and is discharged to the outside of the drum member 53. Humidified air is supplied to the inside of the drum member 53 from the second humidifying unit 66.

The suction unit 59 is disposed under the drum member 53. The suction unit 59 sucks air that is present inside the housing 51 through a plurality of holes that the mesh belt 61a has. The plurality of holes of the mesh belt 61a allows air to pass, but does not allow the fibers, the binder, etc. contained in the mixture to pass easily. The mixture having been discharged to the outside of the drum member 53 is sucked downward together with the air. The suction unit 59 is a known suction device such as a blower.

The mixture is dispersed in the air that is present inside the housing 51, and falls due to the gravity and due to the suction by the suction unit 59 to pile up on the upper surface of the mesh belt 61a. The web W is formed as a result of the mixture piling up on the upper surface of the mesh belt 61a.

The mesh belt 61a is an endless belt. The mesh belt 61a is tensioned by the five tensioning rollers. Due to the rotation of the tensioning rollers, the mesh belt 61a turns counterclockwise in a view taken from the -X1 directional side. The mixture piles up on the mesh belt 61a successively, thereby forming the web W. The web W contains a relatively large amount of air and is thus soft and bulky. By using the turning of the mesh belt 61a, the first transporting unit 61 transports the web W having been formed thereon toward the downstream side.

Downstream of the first transporting unit 61, the second transporting unit 62 takes over the transportation of the web W from the first transporting unit 61. The second transporting unit 62 causes the web W to come off from the upper surface of the mesh belt 61a. The second transporting unit 62 transports the web W having come off toward the molding unit 70. The second transporting unit 62 is disposed over the transportation path of the web W upstream of the -Y1 directional end of the mesh belt 61a. The second transporting unit 62 and the mesh belt 61a are disposed in such a way as to partially overlap with each other along the Z1 axis.

The second transporting unit 62 includes a transportation belt, a plurality of rollers, and a suction mechanism that are not illustrated. A plurality of holes that allows air to pass is provided in the transportation belt. The transportation belt is tensioned by the plurality of rollers, and turns due to the rotation of these rollers.

The second transporting unit 62 causes the upper surface of the web W to be sucked onto the lower surface of the transportation belt by means of negative pressure generated by the suction mechanism. The transportation belt turns with the web W sucked, thereby transporting the web W downstream.

The first humidifying unit 65 humidifies the web W that includes the fibers having been accumulated by the accumulating unit 50 of the third unit group 103. The first humidifying unit 65 is, for example, a mist-type humidifier. The first humidifying unit 65 supplies a mist M for humidification from below to the web W that is transported by the second transporting unit 62. The first humidifying unit 65 is disposed under the second transporting unit 62. The first humidifying unit 65 faces the web W that is transported by the second transporting unit 62. A known humidifying device, for example, an ultrasonic humidifying device or the like, can be applied to the first humidifying unit 65.

Humidifying the web W with the mist M facilitates the function of the starch as the binder. This enhances the strength of the sheet P. Since the first humidifying unit 65 supplies the mist M to the web W from below, it is possible to prevent the dropping of a droplet originating from the mist M onto the web W. Since the first humidifying unit 65 humidifies the web W from the side that is the opposite of the contact surface of the transportation belt and the web W, it is possible to suppress the clinging of the web W to the transportation belt. The second transporting unit 62 transports the web W to the molding unit 70.

The molding unit 70 molds the web W containing the fibers into a shape of the band-like sheet P by applying heat and pressure thereto. The molding unit 70 includes a first molding roller 71 and a second molding roller 72. An electric heater is built in each of the first molding roller 71 and the second molding roller 72. Each of the first molding roller 71 and the second molding roller 72 is capable of increasing the temperature of a roller surface.

The first molding roller 71 and the second molding roller 72 are substantially columnar members. The rotating shaft of the first molding roller 71 and the rotating shaft of the second molding roller 72 are disposed along the X1 axis. The first molding roller 71 is disposed over the transportation path of the web W. The second molding roller 72 is disposed under the transportation path of the web W. Between the first molding roller 71 and the second molding roller 72, there is a clearance corresponding to the thickness of the sheet P that is to be manufactured.

The first molding roller 71 and the second molding roller 72 are driven to rotate by a non-illustrated molding roller driving motor. The web W is sent downstream while being nipped between the first molding roller 71 and the second molding roller 72 and receiving heat and pressure thereat. The web W passes through the molding unit 70 continuously and is press-molded while receiving heat. Using the first molding roller 71 and the second molding roller 72 makes it possible to apply heat and pressure to the web W efficiently.

By passing through the molding unit 70, the web W, which is in a state of containing a relatively large amount of air and being thus soft and bulky, is molded into the band-shaped sheet P, which is in a state of containing less air. The fibers contained in the band-shaped sheet P become bound to one another by the binder. The band-shaped sheet P is transported to the first unit group 101 by non-illustrated transporting rollers.

The cleaning device 40 includes a first cleaning device 41 corresponding to the first molding roller 71 and a second cleaning device 42 corresponding to the second molding roller 72. The cleaning device 40 includes non-illustrated cleaning rollers.

The second humidifying unit 66 is disposed under the first humidifying unit 65. A known vaporization-type humidifying device can be applied to the second humidifying unit 66. For example, a vaporization-type humidifying device blows air to a wet nonwoven fabric or the like to vaporize moisture, thereby producing humidified air.

The second humidifying unit 66 humidifies a predetermined area in the sheet manufacturing apparatus 100. The predetermined area is an area that includes one or more of the buffer tank 13, the separating unit 32, and the drum member 53 of the accumulating unit 50. Humidified air is supplied to the predetermined area from the second humidifying unit 66 through a plurality of non-illustrated ducts. The humidified air suppresses electrification of the fragments of paper C, the fibers, and the like, thereby suppressing the static cling of the fragments of paper C, the fibers, and the like to the members.

The drainage unit 68 is a drain tank. The drainage unit 68 collects and stores moisture having been used by the first humidifying unit 65, the second humidifying unit 66, and the like. The drainage unit 68 is detached from the sheet manufacturing apparatus 100 when necessary. The drainage unit 68 is configured such that a pool of water stored in it can be discarded.

The band-shaped sheet P transported to the first unit group 101 arrives at the first cutting unit 81. The first cutting unit 81 cuts the band-shaped sheet P in a direction intersecting with the transportation direction thereof. An example of the direction intersecting with the transportation direction of the band-shaped sheet P is a direction that is along the X1 axis. The band-shaped sheet P is cut into each sheet P having a single-cut size at the first cutting unit 81. The single-size-cut sheet P is sent from the first cutting unit 81 to the second cutting unit 82.

The second cutting unit 82 cuts the single-size-cut sheet P in the transportation direction. An example of the transportation direction of the single-size-cut sheet P is a direction along the Y1 axis. The second cutting unit 82 trims the region near the +X1-directional-side edge and the region near the -X1-directional-side edge of the single-size-cut sheet P. The second cutting unit 82 shapes the single-size-cut sheet P into the sheet P having a predetermined shape, for example, an A4-sized shape, an A3-sized shape, or the like.

When the second cutting unit 82 cuts the single-size-cut sheet P, the slit strips S, which are remnants, are produced. The slit strips S are sent in substantially the -Y1 direction, and arrive at the crushing unit 95. The crushing unit 95 crushes the slit strips S into pieces, and supplies the crushed pieces to the merging unit 17. A mechanism that weighs the crushed pieces of the slit strips S and supplies a weighed amount of the crushed pieces to the merging unit 17 may be provided between the crushing unit 95 and the merging unit 17.

The sheets P are transported upward, and are then stacked on the tray 91. The sheets P are manufactured by the sheet manufacturing apparatus 100 as recycled paper. The sheet P can be used as, for example, a substitute for copier paper or the like.

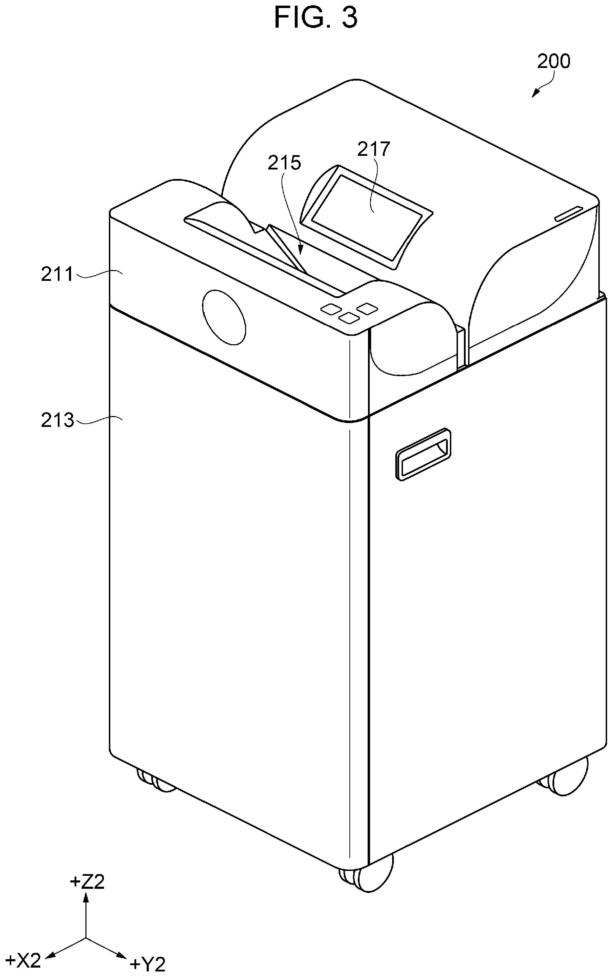

FIG. 3 is a diagram illustrating an external appearance of the waste paper shredder 200. In FIG. 3, the external appearance of the waste paper shredder 200 is illustrated in a perspective view. The waste paper shredder 200 produces the fragments of paper C by shredding waste paper. The fragments of paper C are used as a raw material by the sheet manufacturing apparatus 100. The waste paper shredder 200 includes an armoring cabinet 211, an open-and-close door 213, a paper feed port 215, and a shredder display panel 217.

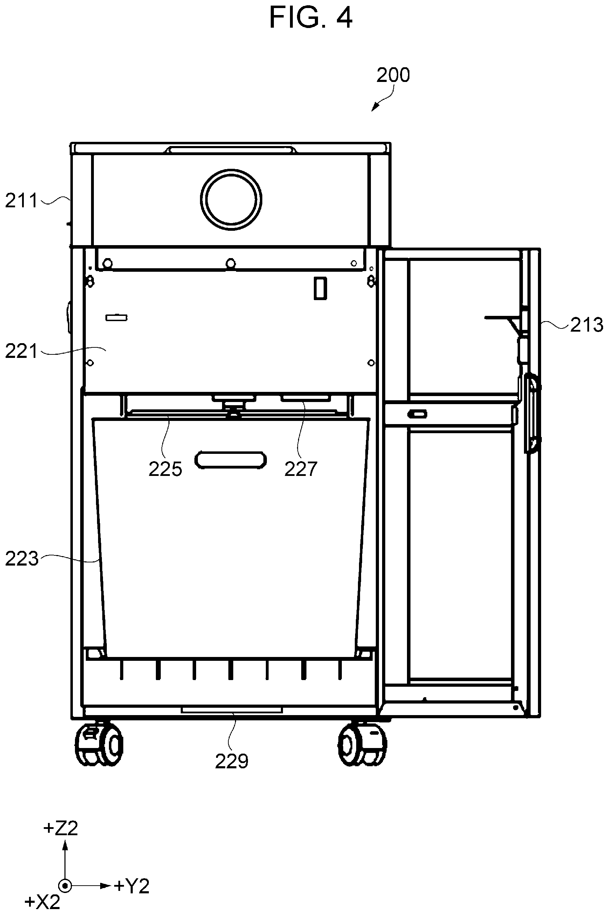

A coordinate system is illustrated in FIG. 3, and in FIG. 4, which will be described later. The Z2 axis is an axis that is perpendicular to a plane on which the waste paper shredder 200 is installed. The +Z2 direction is a direction going up from the installation plane. The -Z2 direction is a direction going down toward the installation plane. The X2 axis is an axis that is parallel to the installation plane. The X2 axis is an axis that connects the front face to the rear face of the waste paper shredder 200. The front face of the waste paper shredder 200 is a surface that faces the user of the waste paper shredder 200 when the user stands in front of the shredder display panel 217. The rear face is a face that is the opposite of the front face. The +X2 direction is a direction going from the rear face toward the front face of the waste paper shredder 200. The - X2 direction is a direction going from the front face toward the rear face thereof. The Y2 axis is an axis that is parallel to the installation plane. The Y2 axis is an axis that is orthogonal to the X2 axis. The +Y2 direction is a direction going from the left toward the right in a plan view taken from the front face of the waste paper shredder 200. The -Y2 direction is a direction going from the right toward the left in a plan view taken from the front face of the waste paper shredder 200.

The armoring cabinet 211 is an external enclosure that covers each unit of the waste paper shredder 200. The armoring cabinet 211 has the open-and-close door 213, the paper feed port 215, and the shredder display panel 217. The armoring cabinet 211 illustrated in FIG. 3 has a shape like a rectangular parallelepiped; however, this does not imply any limitation. The shape of the armoring cabinet 211 is set as appropriate.

The open-and-close door 213 is provided as a part of the armoring cabinet 211. The open-and-close door 213 is configured to be openable and closable. The open-and-close door 213 turns around a pivot extending along the Z2 axis. The open-and-close door 213 is opened and closed by a user. When the user opens the open-and-close door 213, each unit disposed inside the armoring cabinet 211 becomes able to be accessed by the user.

The paper feed port 215 is an opening through which waste paper is fed in. The paper feed port 215 is provided in the +Z2-directional-side surface of the armoring cabinet 211. Waste paper is supplied through the paper feed port 215 to a shredding unit 221, which will be described later. The paper feed port 215 is configured such that a plurality of sheets of paper can be fed through it together in a batch.

The shredder display panel 217 displays various kinds of information. The shredder display panel 217 displays error information such as, for example, "full", "over-temperature", and the like. The shredder display panel 217 displays an amount of paper processed by the waste paper shredder 200, and the like. The shredder display panel 217 is a liquid crystal panel, an organic electro-luminescence (EL) panel, or the like. The shredder display panel 217 corresponds to an example of a display panel.

FIG. 4 is a diagram illustrating a schematic configuration of the waste paper shredder 200. In FIG. 4, the waste paper shredder 200 viewed from the +X2 directional side is illustrated in a plan view. In FIG. 4, the waste paper shredder 200 with the open-and-close door 213 opened is illustrated. In FIG. 4, each unit housed inside the armoring cabinet 211 is illustrated. The armoring cabinet 211 houses a shredding unit 221, the container box 223, a leveling member 225, an optical sensor 227, and the mass sensor 229 inside.

The shredding unit 221 produces a plurality of fragments of paper C by shredding waste paper. The shredding unit 221 includes a plurality of cutters and a shredding unit driving mechanism. The plurality of cutters and the shredding unit driving mechanism are not illustrated. For example, the shredding unit 221 includes a pair of cylindrical cutters. Each of the pair of cylindrical cutters has blades at its peripheral surface. The blades formed at the peripheral surface of each of the pair of cylindrical cutters rotate in a state of being laced in those of the counterpart. The pair of cylindrical cutters are driven to rotate by the shredding unit driving mechanism. Paper fed in through the paper feed port 215 is shredded by the pair of cylindrical cutters. The shredding unit 221 nay include a cross cutter that performs cutting in a direction intersecting with the rotating shaft of the cylindrical cutter. The configuration of the shredding unit 221 is not specifically limited as long as it shreds waste paper. The configuration of the shredding unit 221 can be set as appropriate. The shredding unit 221 corresponds to an example of a shredding unit.

The shredding unit 221 has a non-illustrated shredding unit opening. The shredding unit opening is provided in the -Z2-directional-side face of the shredding unit 221. The shredding unit 221 discharges the fragments of paper C through the shredding unit opening. The fragments of paper C fall from the shredding unit opening in the -Z2 direction.

The container box 223 contains the plurality of fragments of paper C produced by shredding waste paper by the shredding unit 221. The container box 223 is a hollow container. The container box 223 is disposed inside the armoring cabinet 211 at a -Z2-directional-side position with respect to the shredding unit 221. When the user opens the open-and-close door 213, the container box 223 becomes able to be accessed by the user. The container box 223 can be taken out of the armoring cabinet 211 by the user. The fragments of paper C contained in the container box 223 are enveloped in the collection bag G. The collection bag G may have been attached to the container box 223 in advance.

The leveling member 225 makes the top of the plurality of fragments of paper C contained in the container box 223 flat. The leveling member 225 is disposed at a -Z2-directional-side position with respect to the shredding unit 221. The leveling member 225 is driven by a non-illustrated leveling member driving mechanism. Though the waste paper shredder 200 illustrated in Fig. 4 is equipped with the leveling member 225, this does not imply any limitation. The waste paper shredder 200 may be equipped with the leveling member 225, or not equipped with it. The waste paper shredder 200 may preferably be equipped with the leveling member 225. With the leveling member 225, it is possible to efficiently use the capacity of the container box 223.

The optical sensor 227 detects the bulk height of the plurality of fragments of paper C contained in the container box 223. The optical sensor 227 illustrated in FIG. 4 is disposed at a +Z2-directional-side position with respect to the container box 223. The optical sensor 227 is, for example, a reflection-type sensor. The reflection-type sensor detects reflected light of emitted light. The reflection-type sensor detects the bulk height of the plurality of fragments of paper C by detecting the position along the Z2 axis of the plurality of fragments of paper C contained in the container box 223. As a result of the optical sensor 227 detecting the bulk height of the plurality of fragments of paper C, the waste paper shredder 200 is capable of detecting whether the container box 223 is full or not. The optical sensor 227 is not limited to a reflection-type sensor. The optical sensor 227 may be a transmission-type sensor. The position of the optical sensor 227 is not limited to a +Z2-directional-side position with respect to the container box 223. The optical sensor 227 may be disposed at any position as long as it is capable of detecting the bulk height of the plurality of fragments of paper C contained in the container box 223.

The mass sensor 229 measures the mass of the plurality of fragments of paper C contained in the container box 223. The mass sensor 229 is, for example, a load cell. The mass sensor 229 measures the amount of the plurality of fragments of paper C contained in the container box 223 by measuring the mass of the container box 223. As a result of the mass sensor 229 measuring the amount of the plurality of fragments of paper C, the waste paper shredder 200 is capable of detecting whether the container box 223 is full or not. The mass sensor 229 is disposed at a -Z2-directional-side position with respect to the container box 223. The mass sensor 229 outputs the measured amount of the paper fragments. The mass sensor 229 corresponds to an example of a measuring sensor.

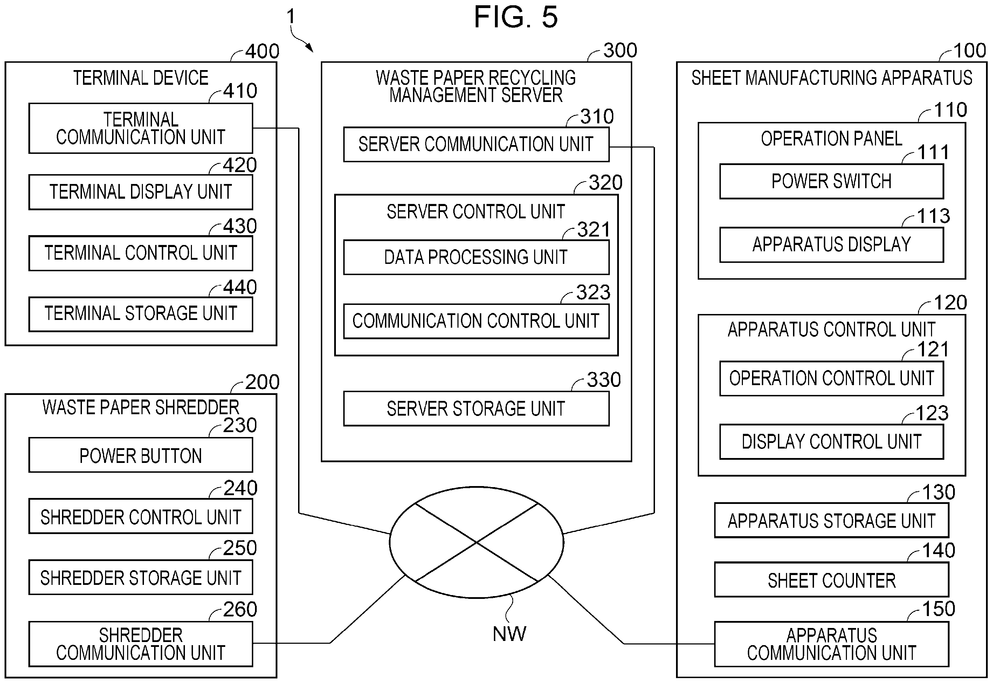

FIG. 5 is a diagram illustrating a block configuration of the waste paper recycling system 1. In FIG. 5, the waste paper recycling system 1 that includes a single sheet manufacturing apparatus 100, a single waste paper shredder 200, the waste paper recycling management server 300, and a single terminal device 400 is illustrated. The sheet manufacturing apparatus 100, the waste paper shredder 200, the waste paper recycling management server 300, and the terminal device 400 are communicably connected to one another via the communication network NW.

The sheet manufacturing apparatus 100 includes an operation panel 110, an apparatus control unit 120, an apparatus storage unit 130, a sheet counter 140, and an apparatus communication unit 150. The operation panel 110, the apparatus control unit 120, the apparatus storage unit 130, the sheet counter 140, and the apparatus communication unit 150 are disposed as appropriate inside the sheet manufacturing apparatus 100, etc.

The operation panel 110 is operated by the user of the sheet manufacturing apparatus 100. The operation panel 110 receives various kinds of input based on operations performed by the user of the sheet manufacturing apparatus 100. The operation panel 110 includes a power switch 111 and an apparatus display 113. The operation panel 110 may include input switches other than the power switch 111. The user of the sheet manufacturing apparatus 100 performs various kinds of setting operation by operating the input switches.

The power switch 111 receives a power input operation and a power input stop operation performed by the user of the sheet manufacturing apparatus 100. When the user of the sheet manufacturing apparatus 100 operates the power switch 111, the sheet manufacturing apparatus 100 is powered on or powered off.

The apparatus display 113 displays various kinds of information. Based on data, etc. transmitted from the waste paper recycling management server 300, the apparatus display 113 displays various kinds of information such as environment-related information. The apparatus display 113 is a liquid crystal panel, an organic EL panel, or the like. The apparatus display 113 corresponds to an example of a display.

The apparatus control unit 120 is an apparatus controller that controls each unit of the sheet manufacturing apparatus 100. The apparatus control unit 120 is, for example, a processor(s) that includes a central processing unit (CPU). The apparatus control unit 120 is configured as a single processor or is made up of a plurality of processors. The apparatus control unit 120 operates as various function units by executing an apparatus control program. The apparatus control unit 120 functions as an operation control unit 121 and a display control unit 123 by executing the apparatus control program. The apparatus control unit 120 may function as a function unit other than the operation control unit 121 and the display control unit 123 by executing the apparatus control program.

The operation control unit 121 controls the operation of the defibrating unit 31, the separating unit 32, the mixing unit 33, and the like. By controlling the operation of each unit, the operation control unit 121 causes the sheet manufacturing apparatus 100 to manufacture the sheet P.

The operation control unit 121 causes the sheet counter 140 to count the number of the sheets P manufactured. Based on the number of the sheets P counted by the sheet counter 140, the operation control unit 121 measures the amount of the sheets P produced by the sheet manufacturing apparatus 100.

The operation control unit 121 controls communication performed by the apparatus communication unit 150. The operation control unit 121 causes the apparatus communication unit 150 to transmit the produced amount of the sheets P to the waste paper recycling management server 300. The operation control unit 121 causes the apparatus communication unit 150 to receive, from the waste paper recycling management server 300, notification information that is based on the produced amount of the sheets P having been transmitted thereto.

The display control unit 123 controls display information displayed on the apparatus display 113. The display control unit 123 causes the apparatus display 113 to display the environment-related information included in the notification information having been received from the waste paper recycling management server 300. The display control unit 123 may cause the apparatus display 113 to display any information other than the environment-related information. For example, the display control unit 123 may cause the apparatus display 113 to display the produced amount of the sheets P.

The apparatus storage unit 130 stores various programs and various kinds of data. The apparatus storage unit 130 stores the apparatus control program. The apparatus storage unit 130 stores the produced amount of the sheets P, the environment-related information, and the like. The apparatus storage unit 130 is a volatile semiconductor memory such as a random access memory (RAM), a read only memory (ROM), a non-volatile memory such as a flash memory, etc.

The sheet counter 140 counts the number of the sheets P manufactured by the sheet manufacturing apparatus 100. By counting the number of the sheets P, the sheet counter 140 measures the amount of the sheets P reproduced by the sheet manufacturing apparatus 100. The produced amount of the sheets P is, for example, the mass of the sheets P reproduced by the sheet manufacturing apparatus 100. The produced amount of the sheets P may be the number of the sheets P. The sheet counter 140 is disposed at the tray 91 or on the transportation path along which the sheets P are transported to the tray 91. The sheet counter 140 is an optical sensor or the like. The sheet counter 140 corresponds to an example of a counter.

The apparatus communication unit 150 is an interface circuit for communicable connection to the waste paper recycling management server 300 and the like. The apparatus communication unit 150 gets connected to the waste paper recycling management server 300 and the like by wire or wirelessly in accordance with a predetermined communication protocol. The apparatus communication unit 150 includes a wired connector, a wireless communication port, or the like. The wired connector is a universal serial bus (USB) connector, a local area network (LAN) connector, or the like. The wireless communication port is a Wi-Fi communication port, a Bluetooth communication port, or the like. "Wi-Fi" and "Bluetooth" are registered trademarks. The apparatus communication unit 150 receives various kinds of information such as notification information from the waste paper recycling management server 300 and the like via the communication network NW. The apparatus communication unit 150 transmits the produced amount of the sheets P and the like to the waste paper recycling management server 300 and the like via the communication network NW. The apparatus communication unit 150 corresponds to an example of a second communication unit.

The waste paper shredder 200 includes a power button 230, a shredder control unit 240, a shredder storage unit 250, and a shredder communication unit 260.

The power button 230 receives a power input operation and a power input stop operation performed by the user of the waste paper shredder 200. When the user of the waste paper shredder 200 operates the power button 230, the waste paper shredder 200 is powered on or powered off. When the waste paper shredder 200 is powered on, the waste paper shredder 200 becomes able to shred waste paper.

The shredder control unit 240 is a shredder controller that controls each unit of the waste paper shredder 200. The shredder control unit 240 is, for example, a processor(s) that includes a CPU. The shredder control unit 240 is configured as a single processor or is made up of a plurality of processors. The shredder control unit 240 causes the shredding unit 221 to shred waste paper. The shredder control unit 240 causes the mass sensor 229 to measure the amount of the plurality of fragments of paper C contained in the container box 223.

By controlling the shredder communication unit 260, the shredder control unit 240 transmits the amount of the paper fragments to the waste paper recycling management server 300. The shredder control unit 240 causes the shredder communication unit 260 to receive, from the waste paper recycling management server 300, notification information that is based on the amount of the paper fragments having been transmitted thereto.

The shredder storage unit 250 stores various programs and various kinds of information. The shredder storage unit 250 stores the amount of the paper fragments C measured by the mass sensor 229. The shredder storage unit 250 stores the notification information and the like transmitted from the waste paper recycling management server 300. The shredder storage unit 250 is a volatile semiconductor memory such as a RAM, a ROM, a non-volatile memory such as a flash memory, etc.

The shredder communication unit 260 is an interface circuit for communicable connection to the waste paper recycling management server 300 and the like. The shredder communication unit 260 gets connected to the waste paper recycling management server 300 and the like by wire or wirelessly in accordance with a predetermined communication protocol. The shredder communication unit 260 includes a wired connector, a wireless communication port, or the like. The wired connector is a USB connector, a LAN connector, or the like. The wireless communication port is a Wi-Fi communication port, a Bluetooth communication port, or the like. The shredder communication unit 260 receives various kinds of information such as notification information from the waste paper recycling management server 300 and the like via the communication network NW. The shredder communication unit 260 transmits the amount of the paper fragments C and the like to the waste paper recycling management server 300 and the like via the communication network NW. The shredder communication unit 260 corresponds to an example of a first communication unit.

The waste paper recycling management server 300 includes a server communication unit 310, a server control unit 320, and a server storage unit 330. The waste paper recycling management server 300 may include a non-illustrated display device, a non-illustrated input/output unit, and the like.

The server communication unit 310 is an interface circuit for communicable connection to the sheet manufacturing apparatus 100 and the like. The server communication unit 310 gets connected to the sheet manufacturing apparatus 100 and the like by wire or wirelessly in accordance with a predetermined communication protocol. The server communication unit 310 includes a wired connector, a wireless communication port, or the like. The wired connector is a USB connector, a LAN connector, or the like. The wireless communication port is a Wi-Fi communication port, a Bluetooth communication port, or the like. The server communication unit 310 receives information such as the produced amount of the sheets P from the sheet manufacturing apparatus 100 via the communication network NW. The server communication unit 310 receives information such as the amount of the paper fragments C from the waste paper shredder 200 via the communication network NW. The server communication unit 310 transmits notification information and the like to at least one of the sheet manufacturing apparatus 100 or the waste paper shredder 200 via the communication network NW. The server communication unit 310 may transmit notification information and the like to a terminal communication unit 410 of the terminal device 400 via the communication network NW. The terminal communication unit 410 will be described later. The server communication unit 310 corresponds to an example of a third communication unit.

The server control unit 320 is a server controller that controls each unit of the waste paper recycling management server 300. The server control unit 320 is, for example, a processor(s) that includes a CPU. The server control unit 320 is configured as a single processor or is made up of a plurality of processors. The server control unit 320 functions as various function units by executing a server control program. The server control unit 320 functions as a data processing unit 321 and a communication control unit 323 by executing the server control program. The server control unit 320 may function as a function unit other than the data processing unit 321 and the communication control unit 323 by executing the server control program. The server control unit 320 corresponds to an example of a control unit.

The data processing unit 321 generates the environment-related information included in the notification information. The data processing unit 321 acquires the produced amount of the sheets P from the sheet manufacturing apparatus 100 by means of the server communication unit 310. The data processing unit 321 acquires the amount of the paper fragments C from the waste paper shredder 200 by means of the server communication unit 310. Based on at least one of the produced amount of the sheets P or the amount of the paper fragments C, the data processing unit 321 generates the environment-related information. The environment-related information corresponds to an example of waste paper recycling information.

The environment-related information is an index that indicates a contribution to a reduction in environmental burdens that is achieved through recycling waste paper with the waste paper recycling system 1. The environment-related information is expressed in terms of numerical values, images, and the like. The environment-related information is, for example, an amount of environmental contribution related to carbon dioxide, an amount of environmental contribution related to water, and an amount of environmental contribution related to wood by the sheet manufacturing apparatus 100. The environment-related information includes an amount of environmental contribution related to carbon dioxide, an amount of environmental contribution related to water, and an amount of environmental contribution related to wood by the waste paper shredder 200. The environment-related information may include each individual contribution ratio of environmental contribution by the sheet manufacturing apparatus 100 and the waste paper shredder 200 in the waste paper recycling system 1.

The amount of environmental contribution related to carbon dioxide by the sheet manufacturing apparatus 100 is the difference between an amount of carbon dioxide emitted when commercially available paper such as copier paper is manufactured and an amount of carbon dioxide emitted when the sheets P, which are recycled paper, are manufactured using the sheet manufacturing apparatus 100. The commercially available paper means paper that is manufactured from wood in a non-recycled manner. The amount of environmental contribution related to carbon dioxide by the sheet manufacturing apparatus 100 is calculated using Equation 1 shown below. The amount of environmental contribution related to carbon dioxide corresponds to an example of an amount of carbon dioxide reduction. Amount of environmental contribution related to carbon dioxide = (Produced amount of sheets) × (Amount of carbon dioxide emission per ton of sheets) - (Produced amount of sheets) × (Amount of carbon dioxide emission per ton of commercially available paper)

In the above equation, "produced amount of sheets" is a value obtained by multiplying the number of the sheets P counted by the sheet counter 140 by a mass per sheet P. The mass of the sheet P has been set in advance. The amount of environmental contribution related to carbon dioxide by the sheet manufacturing apparatus 100 represents an amount of carbon dioxide emission reduced through manufacturing the sheets P with the sheet manufacturing apparatus 100. The amount of environmental contribution related to carbon dioxide by the sheet manufacturing apparatus 100 is calculated on the basis of the produced amount of the sheets P.

The amount of environmental contribution related to water by the sheet manufacturing apparatus 100 is the difference between an amount of water consumed when commercially available paper is manufactured and an amount of water consumed when the sheets P, which are recycled paper, are manufactured using the sheet manufacturing apparatus 100. The amount of environmental contribution related to water represents an amount of water consumption reduced through manufacturing the sheets P with the sheet manufacturing apparatus 100. The amount of environmental contribution related to water by the sheet manufacturing apparatus 100 is calculated on the basis of the produced amount of the sheets P. The amount of environmental contribution related to water by the sheet manufacturing apparatus 100 is calculated using Equation 2 shown below. The amount of environmental contribution related to water corresponds to an example of an amount of water reduction. Amount of environmental contribution related to water = (Produced amount of sheets) × (Amount of water consumption per ton of sheets) - (Produced amount of sheets) × (Amount of water consumption per ton of commercially available paper)

The amount of environmental contribution related to wood by the sheet manufacturing apparatus 100 is the ratio of the number of the sheets P manufactured by the sheet manufacturing apparatus 100 to an amount of wood consumed when commercially available paper is manufactured. The amount of environmental contribution related to wood represents an amount of wood consumption reduced through manufacturing the sheets P with the sheet manufacturing apparatus 100. The amount of environmental contribution related to wood by the sheet manufacturing apparatus 100 is calculated on the basis of the produced amount of the sheets P. The amount of environmental contribution related to wood by the sheet manufacturing apparatus 100 is calculated using Equation 3 shown below. The amount of environmental contribution related to wood corresponds to an example of an amount of wood reduction. Amount of environmental contribution related to wood = (Number of sheets manufactured)/13,000

In the above equation, the constant 13,000 represents the number of sheets of commercially available paper that can be manufactured from a single piece of wood.

The amount of environmental contribution related to carbon dioxide, the amount of environmental contribution related to water, and the amount of environmental contribution related to wood by the waste paper shredder 200 are calculated from the amount of environmental contribution related to carbon dioxide, the amount of environmental contribution related to water, and the amount of environmental contribution related to wood by the sheet manufacturing apparatus 100. The amount of environmental contribution related to carbon dioxide, the amount of environmental contribution related to water, and the amount of environmental contribution related to wood by the waste paper shredder 200 are calculated using Equation 4 shown below. Amount of contribution by waste paper shredder = (Amount of environmental contribution by sheet manufacturing apparatus) × (Amount of paper fragments)/(Amount of paper fragments used by sheet manufacturing apparatus)

In the above equation, the amount of contribution by the waste paper shredder 200 represents any of the amount of environmental contribution related to carbon dioxide, the amount of environmental contribution related to water, and the amount of environmental contribution related to wood. The amount of environmental contribution by the sheet manufacturing apparatus 100 represents any of the amount of environmental contribution related to carbon dioxide, the amount of environmental contribution related to water, and the amount of environmental contribution related to wood by the sheet manufacturing apparatus 100. When the amount of environmental contribution by the sheet manufacturing apparatus 100 is the amount of environmental contribution related to carbon dioxide, the amount of environmental contribution by the waste paper shredder 200 represents the amount of environmental contribution related to carbon dioxide by the waste paper shredder 200. The amount of contribution by the waste paper shredder 200 is calculated on the basis of the produced amount of the sheets P and the amount of the paper fragments C.

The contribution ratio of environmental contribution by the waste paper shredder 200 is calculated when the waste paper recycling system 1 includes a plurality of waste paper shredders 200. The contribution ratio of environmental contribution by the waste paper shredder 200 is the ratio of the amount of the paper fragments C produced by the waste paper shredder 200 that is particular one to the amount of the paper fragments C produced by all of the waste paper shredders 200 included in the waste paper recycling system 1. The contribution ratio of environmental contribution by the waste paper shredder 200 is calculated on the basis of the amount of the paper fragments C.

The contribution ratio of environmental contribution by the sheet manufacturing apparatus 100 is calculated when the waste paper recycling system 1 includes a plurality of sheet manufacturing apparatuses 100. The contribution ratio of environmental contribution by the sheet manufacturing apparatus 100 is the ratio of the amount of the sheets P produced by the sheet manufacturing apparatus 100 that is particular one to the amount of the sheets P produced by all of the sheet manufacturing apparatuses 100 included in the waste paper recycling system 1. The contribution ratio of environmental contribution by the sheet manufacturing apparatus 100 is calculated on the basis of the produced amount of the sheets P.

The data processing unit 321 generates notification information for notification of the environment-related information. The notification information includes at least one of the amount of environmental contribution related to carbon dioxide, the amount of environmental contribution related to water, or the amount of environmental contribution related to wood by the sheet manufacturing apparatus 100. The notification information may include at least one of the amount of environmental contribution related to carbon dioxide, the amount of environmental contribution related to water, or the amount of environmental contribution related to wood by the waste paper shredder 200. The notification information may include the contribution ratio of environmental contribution by the waste paper shredder 200 and the contribution ratio of environmental contribution by the sheet manufacturing apparatus 100. The notification information corresponds to an example of user notification information.

The communication control unit 323 controls information that is transmitted or received by means of the server communication unit 310. The communication control unit 323 commands that the notification information generated by the data processing unit 321 be transmitted to at least one of the sheet manufacturing apparatus 100 or the waste paper shredder 200. The communication control unit 323 may command that the notification information generated by the data processing unit 321 be transmitted to the terminal device 400. Based on the control by the communication control unit 323, the server communication unit 310 transmits the notification information to at least one of the apparatus communication unit 150 or the shredder communication unit 260. Based on the control by the communication control unit 323, the server communication unit 310 transmits the notification information to the terminal communication unit 410, which will be described later.

The server storage unit 330 stores various programs, various kinds of information, and the like. The server storage unit 330 stores the produced amount of the sheets P transmitted from the sheet manufacturing apparatus 100 and the amount of the paper fragments C transmitted from the waste paper shredder 200. The server storage unit 330 stores the environment-related information generated by the data processing unit 321. The server storage unit 330 is a volatile semiconductor memory such as a RAM, a ROM, a non-volatile memory such as a flash memory, etc. The server storage unit 330 may include a magnetic recording device such as a hard disk drive (HDD).

The terminal device 400 displays the notification information transmitted from the waste paper recycling management server 300. The terminal device 400 includes the terminal communication unit 410, a terminal display unit 420, a terminal control unit 430, and a terminal storage unit 440.

The terminal communication unit 410 is an interface circuit for communicable connection to the waste paper recycling management server 300 and the like. The terminal communication unit 410 gets connected to the waste paper recycling management server 300 and the like by wire or wirelessly in accordance with a predetermined communication protocol. The terminal communication unit 410 includes a wired connector, a wireless communication port, or the like. The wired connector is a USB connector, a LAN connector, or the like. The wireless communication port is a Wi-Fi communication port, a Bluetooth communication port, or the like. The terminal communication unit 410 receives the notification information from the waste paper recycling management server 300 via the communication network NW.

The terminal display unit 420 displays various kinds of information. The terminal display unit 420 displays the environment-related information and the like included in the notification information. For example, the terminal display unit 420 displays at least one of the amount of environmental contribution related to carbon dioxide, the amount of environmental contribution related to water, or the amount of environmental contribution related to wood by the sheet manufacturing apparatus 100.

The terminal control unit 430 is a terminal controller that controls each unit of the terminal device 400. The terminal control unit 430 is, for example, a processor(s) that includes a CPU. The terminal control unit 430 is configured as a single processor or is made up of a plurality of processors. The terminal control unit 430 functions as various function units by executing an application. The terminal control unit 430 controls the terminal display unit 420 and causes it to display the notification information.

The terminal storage unit 440 stores various application programs and various kinds of information. The terminal storage unit 440 stores the environment-related information included in the notification information. The terminal storage unit 440 is a volatile semiconductor memory such as a RAM, a ROM, a non-volatile memory such as a flash memory, etc.

The waste paper recycling system 1 includes the waste paper recycling management server 300, the sheet manufacturing apparatus 100 that is communicably connected to the waste paper recycling management server 300 via the communication network NW, and the waste paper shredder 200 that is connected to the waste paper recycling management server 300 via the communication network NW. The waste paper shredder 200 includes the shredding unit 221 that shreds waste paper to produce the plurality of fragments of paper C, the mass sensor 229 that measures the amount of the plurality of fragments of paper C, and the shredder communication unit 260 that transmits the amount of the paper fragments to the waste paper recycling management server 300. The sheet manufacturing apparatus 100 includes the third unit group 103 that recycles the plurality of fragments of paper C produced by the waste paper shredder 200 into each sheet P, the sheet counter 140 that measures the produced amount of the sheets P, and the apparatus communication unit 150 that transmits the produced amount to the waste paper recycling management server 300. The waste paper recycling management server 300 includes the server communication unit 310 that receives the amount of the paper fragments and the produced amount, and the server control unit 320 that generates notification information on a basis of at least one of the amount of the paper fragments or the produced amount. The server communication unit 310 transmits the notification information to at least one of the shredder communication unit 260 or the apparatus communication unit 150. The user of the sheet manufacturing apparatus 100 or the user of the waste paper shredder 200 that are provided in the waste paper recycling system 1 is able to know the contribution to environment that is achieved by the sheet production through the recycling.

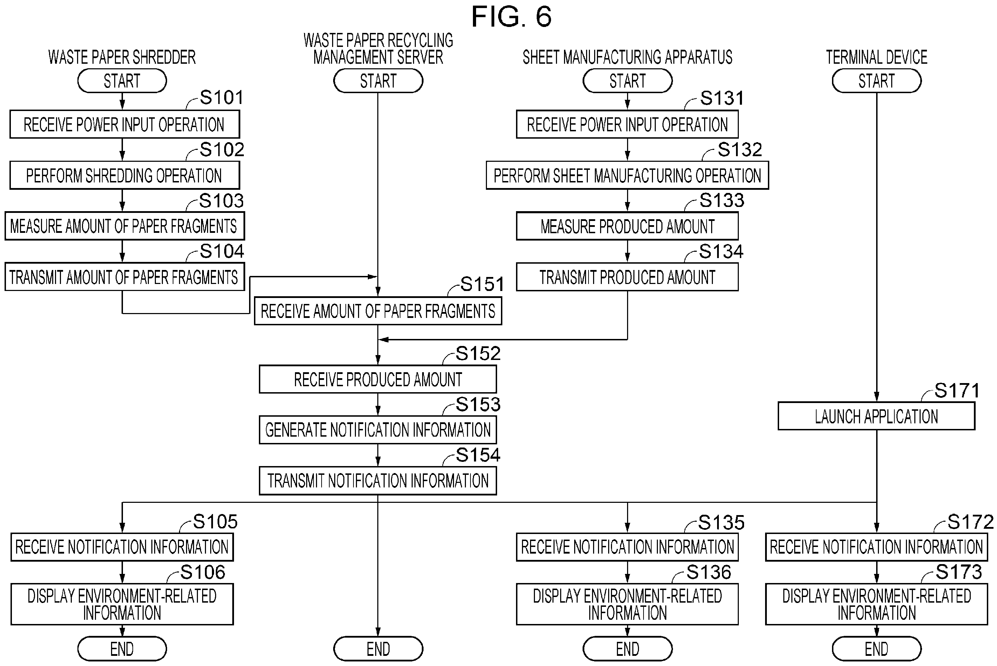

FIG. 6 is a diagram illustrating a control flow of the waste paper recycling system 1. In FIG. 6, a control flow of the waste paper recycling system 1 that includes a single sheet manufacturing apparatus 100, a single waste paper shredder 200, the waste paper recycling management server 300, and a single terminal device 400 is illustrated. The waste paper recycling system 1 manages environment-related information by executing the control flow. The control flow corresponds to an example of a method of managing waste paper recycling information.

In step S101, the waste paper shredder 200 receives a power input operation. The waste paper shredder 200 receives the power input operation when the user of the waste paper shredder 200 performs an operation input on the power button 230. This puts the waste paper shredder 200 into a state of being able to execute waste paper shredding.

After receiving the power input operation, in step S102, the waste paper shredder 200 performs shredding operation. When the user of the waste paper shredder 200 feeds waste paper into the paper feed port 215, the shredding unit 221 shreds the waste paper to produce the plurality of fragments of paper C. The fragments of paper C having been produced are contained in the container box 223.

After performing the shredding operation, in step S103, the waste paper shredder 200 performs paper fragment amount measurement. The mass sensor 229 measures the amount of the plurality of fragments of paper C contained in the container box 223. The mass sensor 229 performs the paper fragment amount measurement after the shredding unit 221 finishes the shredding operation. The mass sensor 229 may perform the paper fragment amount measurement while the shredding unit 221 is shredding the waste paper.

After measuring the paper fragment amount, in step S104, the waste paper shredder 200 transmits the amount of the paper fragments to the waste paper recycling management server 300. The shredder communication unit 260 transmits the amount of the paper fragments to the server communication unit 310 of the waste paper recycling management server 300 via the communication network NW. The waste paper shredder 200 transmits the amount of the paper fragments when the container box 223 becomes full. The fragments of paper C having been measured are put into the collection bag G. The collection bag G is transported by the transportation service provider B to the first enterprise A1 that owns the sheet manufacturing apparatus 100.

In step S131, the sheet manufacturing apparatus 100 receives a power input operation. The sheet manufacturing apparatus 100 receives the power input operation when the user of the sheet manufacturing apparatus 100 performs an operation input on the power switch 111. This puts the sheet manufacturing apparatus 100 into a state of being able to manufacture the sheets P.

After receiving the power input operation, in step S132, the sheet manufacturing apparatus 100 performs sheet manufacturing operation. The fragments of paper C that were produced by the waste paper shredder 200 are fed as a raw material into the sheet manufacturing apparatus 100. The sheet manufacturing apparatus 100 recycles this input of the fragments of paper C into the sheets P.

After performing the sheet manufacturing operation, in step S133, the sheet manufacturing apparatus 100 measures the produced amount of the sheets P. The sheet counter 140 counts the number of the sheets P having been reproduced by the sheet manufacturing apparatus 100. By counting the number of the sheets P, the sheet manufacturing apparatus 100 measures the produced amount of the sheets P.

After measuring the produced amount of the sheets P, in step S134, the sheet manufacturing apparatus 100 transmits the produced amount to the waste paper recycling management server 300. The apparatus communication unit 150 transmits the produced amount to the server communication unit 310 of the waste paper recycling management server 300 via the communication network NW. The sheet manufacturing apparatus 100 transmits the produced amount to the waste paper recycling management server 300 at a predetermined timing. For example, at the timing of the finishing of the manufacturing of the sheets P, the sheet manufacturing apparatus 100 transmits the produced amount to the waste paper recycling management server 300.

When the waste paper shredder 200 transmits the amount of the paper fragments, in step S151, the waste paper recycling management server 300 receives the amount of the paper fragments. The waste paper recycling management server 300 receives, by means of the server communication unit 310, the amount of the paper fragments transmitted from the waste paper shredder 200 via the communication network NW.

When the sheet manufacturing apparatus 100 transmits the produced amount, in step S152, the waste paper recycling management server 300 receives the produced amount of the sheets P. The waste paper recycling management server 300 receives, by means of the server communication unit 310, the produced amount transmitted from the sheet manufacturing apparatus 100 via the communication network NW.

After receiving the amount of the paper fragments and the produced amount, in step S153, the waste paper recycling management server 300 generates notification information. Based on at least one of the amount of the paper fragments or the produced amount, the server control unit 320 generates environment-related information. The environment-related information includes at least one of the amount of environmental contribution related to carbon dioxide, the amount of environmental contribution related to water, or the amount of environmental contribution related to wood by the sheet manufacturing apparatus 100. The environment-related information may include at least one of the amount of environmental contribution related to carbon dioxide, the amount of environmental contribution related to water, or the amount of environmental contribution related to wood by the waste paper shredder 200. The server control unit 320 generates the notification information that includes the environment-related information.

After generating the notification information, in step S154, the waste paper recycling management server 300 transmits the notification information. The server communication unit 310 transmits the notification information to at least one of the shredder communication unit 260 or the apparatus communication unit 150 via the communication network NW. The server communication unit 310 may transmit the notification information to the terminal communication unit 410 via the communication network NW.

When the waste paper recycling management server 300 transmits the notification information to the waste paper shredder 200, in step S105, the waste paper shredder 200 receives the notification information. The shredder communication unit 260 receives the notification information transmitted from the server communication unit 310 of the waste paper recycling management server 300 via the communication network NW.

After receiving the notification information, in step S106, the waste paper shredder 200 displays the environment-related information. The shredder display panel 217 of the waste paper shredder 200 displays the environment-related information included in the notification information.

When the waste paper recycling management server 300 transmits the notification information to the sheet manufacturing apparatus 100, in step S135, the sheet manufacturing apparatus 100 receives the notification information. The apparatus communication unit 150 receives the notification information transmitted from the server communication unit 310 of the waste paper recycling management server 300 via the communication network NW.

After receiving the notification information, in step S136, the sheet manufacturing apparatus 100 displays the environment-related information. The apparatus display 113 of the sheet manufacturing apparatus 100 displays the environment-related information included in the notification information.

In step S171, the terminal device 400 launches an application in advance. The terminal device 400 executes in advance the application that makes it possible to perform notification of the notification information. An application program for launching the application has been stored in the terminal storage unit 440 in advance.

When the waste paper recycling management server 300 transmits the notification information to the terminal device 400, in step S172, the terminal device 400 receives the notification information. The terminal communication unit 410 receives the notification information transmitted from the server communication unit 310 of the waste paper recycling management server 300 via the communication network NW.

After receiving the notification information, in step S173, the terminal device 400 displays the environment-related information. The terminal display unit 420 of the terminal device 400 displays the environment-related information included in the notification information.

The control flow is executed by the waste paper recycling system 1 that includes the waste paper recycling management server 300, the sheet manufacturing apparatus 100, and the waste paper shredder 200. The waste paper shredder 200 measures the amount of the paper fragments C produced when shredding waste paper, and transmits the amount of the paper fragments C to the waste paper recycling management server 300. The sheet manufacturing apparatus 100 recycles the paper fragments C produced by the waste paper shredder 200 into each sheet P, measures the amount of the sheets P produced through the recycling, and transmits the produced amount of the sheets P to the waste paper recycling management server 300. The waste paper recycling management server 300 receives the amount of the paper fragments and the produced amount, generates notification information on a basis of at least one of the amount of the paper fragments or the produced amount, and transmits the notification information. The user of the sheet manufacturing apparatus 100 or the user of the waste paper shredder 200 that are provided in the waste paper recycling system 1 is able to know the contribution to environment that is achieved by the sheet production through the recycling.

The notification information includes at least one of the amount of environmental contribution related to carbon dioxide, the amount of environmental contribution related to water, or the amount of environmental contribution related to wood that is or are achieved through recycled production of the sheets P from waste paper by the sheet manufacturing apparatus 100. The user of the sheet manufacturing apparatus 100 or the user of the waste paper shredder 200 that are provided in the waste paper recycling system 1 is able to acquire an index that indicates a contribution to a reduction in environmental burdens related to at least one of carbon dioxide, water, or wood. In the present disclosure, a greater number of users get involved in the waste paper recycling system 1 by installing the waste paper shredders 200 at a plurality of bases in a distributed manner. By acquiring the notification information, the user of the waste paper shredder 200 or the user of the sheet manufacturing apparatus 100 is able to quantitatively recognize that the user's own activities make an environmental contribution. Moreover, it is possible to make a public appeal about the environmental contribution activities by making the acquired information public. With such an incentive, it is expected to motivate a greater number of users to participate in the environmental contribution activities using the waste paper recycling system 1.

The waste paper shredder 200 includes the shredder display panel 217. The waste paper shredder 200 may receive the notification information and may cause the shredder display panel 217 to display the notification information. The user of the waste paper shredder 200 is able to confirm the index that indicates a contribution to a reduction in environmental burdens that is achieved by the waste paper recycling system 1.

The sheet manufacturing apparatus 100 includes the apparatus display 113. The waste paper recycling management server 300 transmits the notification information to the sheet manufacturing apparatus 100. The sheet manufacturing apparatus 100 may receive the notification information transmitted from the waste paper recycling management server 300 and may cause the apparatus display 113 to display the notification information. The user of the sheet manufacturing apparatus 100 is able to confirm the index that indicates a contribution to a reduction in environmental burdens that is achieved by the waste paper recycling system 1.

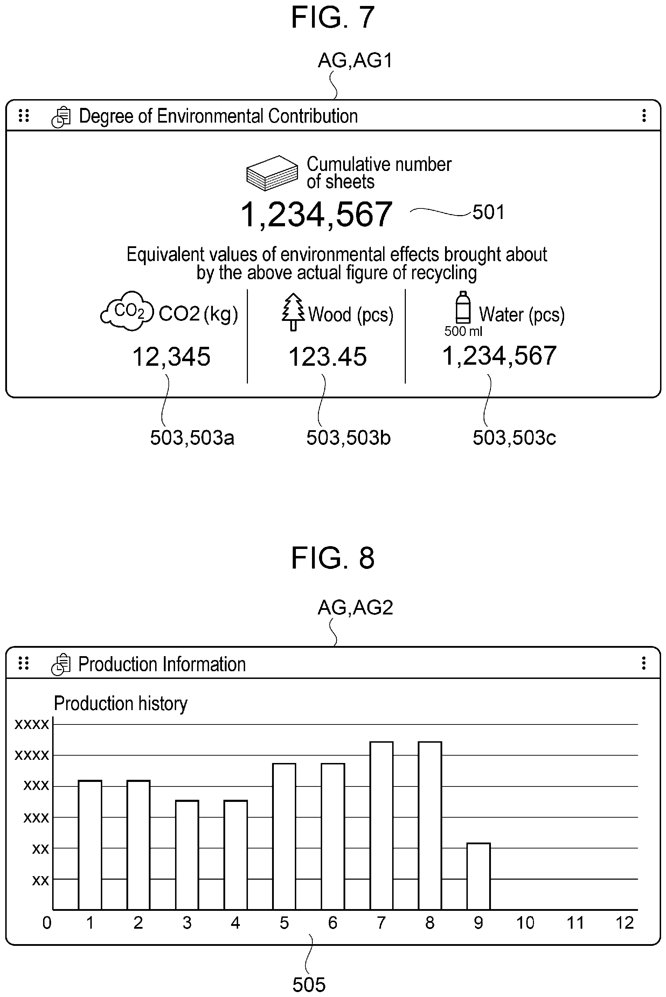

FIG. 7 is a diagram illustrating an example of display on the apparatus display 113. An example of an apparatus display screen AG displayed on the apparatus display 113 of the sheet manufacturing apparatus 100 is illustrated in FIG. 7. A first apparatus display screen AG1, which is an example of the apparatus display screen AG, is illustrated in FIG. 7.

The first apparatus display screen AG1 shows cumulative number of sheets 501 and environmental effect equivalent values 503. The environmental effect equivalent values 503 include a carbon dioxide equivalent value 503a, a wood equivalent value 503b, and a water equivalent value 503c.

The cumulative number of sheets 501 represents the cumulative count of the sheets P having been manufactured by the sheet manufacturing apparatus 100. When the waste paper recycling system 1 includes a plurality of sheet manufacturing apparatuses 100, the cumulative number of sheets 501 may represent the cumulative count of the sheets P having been manufactured by the plurality of sheet manufacturing apparatuses 100.

The carbon dioxide equivalent value 503a, which is one of the environmental effect equivalent values 503, is a numerical value that quantifies the amount of environmental contribution related to carbon dioxide. The carbon dioxide equivalent value 503a illustrated in FIG. 7 expresses the amount of environmental contribution related to carbon dioxide in terms of the mass of carbon dioxide. The carbon dioxide equivalent value 503a is not limited to the mass of carbon dioxide. As long as this value expresses the amount of environmental contribution related to carbon dioxide, the manner of its expression is not specifically limited.

The wood equivalent value 503b, which is one of the environmental effect equivalent values 503, is a numerical value that quantifies the amount of environmental contribution related to wood. The wood equivalent value 503b illustrated in FIG. 7 expresses the amount of environmental contribution related to wood in terms of the number of pieces of wood. The wood equivalent value 503b is not limited to the number of pieces of wood. As long as this value expresses the amount of environmental contribution related to wood, the manner of its expression is not specifically limited.

The water equivalent value 503c, which is one of the environmental effect equivalent values 503, is a numerical value that quantifies the amount of environmental contribution related to water. The water equivalent value 503c illustrated in FIG. 7 expresses the amount of environmental contribution related to water in terms of the number of predetermined containers. An example of the predetermined container is a 500-milliliter PET (polyethylene terephthalate) bottle. The water equivalent value 503c is not limited to the number of predetermined containers. As long as this value expresses the amount of environmental contribution related to water, the manner of its expression is not specifically limited.

Though the carbon dioxide equivalent value 503a, the wood equivalent value 503b, and the water equivalent value 503c are displayed as the environmental effect equivalent values 503 on the first apparatus display screen AG1 illustrated in FIG. 7, this does not imply any limitation. At least one of the carbon dioxide equivalent value 503a, the wood equivalent value 503b, or the water equivalent value 503c may be displayed on the first apparatus display screen AG1. By looking at the first apparatus display screen AG1, the user of the sheet manufacturing apparatus 100 is able to confirm environmental improvement effects produced by the waste paper recycling system 1.

FIG. 8 is a diagram illustrating an example of display on the apparatus display 113. An example of the apparatus display screen AG displayed on the apparatus display 113 of the sheet manufacturing apparatus 100 is illustrated in FIG. 8. A second apparatus display screen AG2, which is an example of the apparatus display screen AG, is illustrated in FIG. 8.

The second apparatus display screen AG2 shows a production history graph 505. The production history graph 505 shows, for example, in a month-by-month graph format, the number of the sheets P having been manufactured by the sheet manufacturing apparatus 100. Though the second apparatus display screen AG2 shows the month-by-month number of the sheets P having been manufactured as a production history, this does not imply any limitation. The second apparatus display screen AG2 may show the environmental effect equivalent values 503 in a month-by-month graph format. The second apparatus display screen AG2 may show the environmental effect equivalent values 503 in a week-by-week graph format. The environmental effect equivalent values 503, etc. can be displayed as appropriate on the second apparatus display screen AG2.

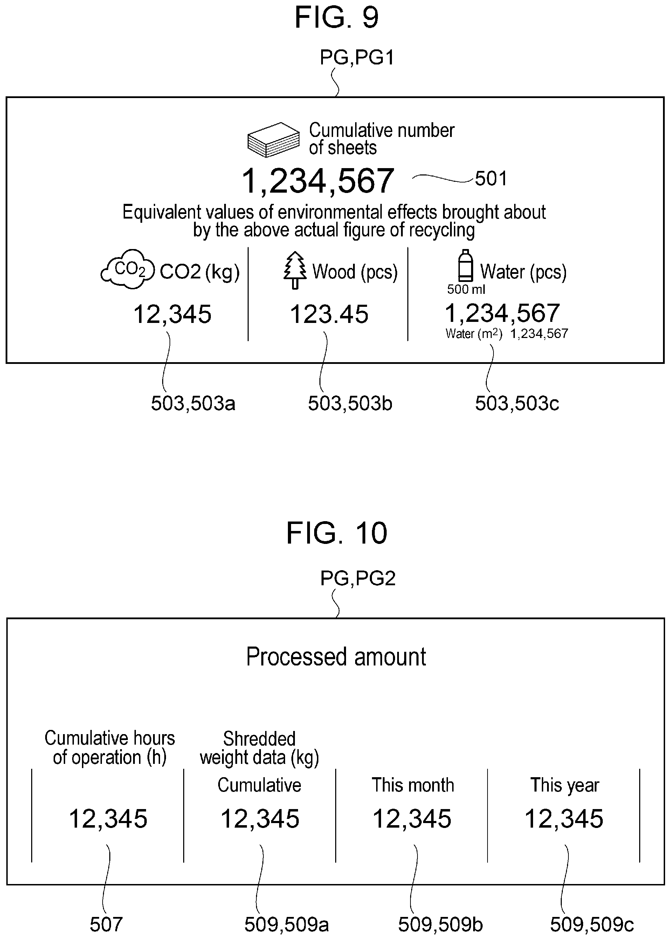

FIG. 9 is a diagram illustrating an example of display on the shredder display panel 217. An example of a panel display screen PG displayed on the shredder display panel 217 of the waste paper shredder 200 is illustrated in FIG. 9. A first panel display screen PG1, which is an example of the panel display screen PG, is illustrated in FIG. 9.

The first panel display screen PG1 shows the cumulative number of sheets 501 and the environmental effect equivalent values 503. The environmental effect equivalent values 503 include the carbon dioxide equivalent value 503a, the wood equivalent value 503b, and the water equivalent value 503c. The cumulative number of sheets 501 and the environmental effect equivalent values 503 that are displayed on the first panel display screen PG1 are the same as the cumulative number of sheets 501 and the environmental effect equivalent values 503 that are displayed on the first apparatus display screen AG1. By looking at the first panel display screen PG1, the user of the waste paper shredder 200 is able to confirm environmental improvement effects produced by the waste paper recycling system 1.

FIG. 10 is a diagram illustrating an example of display on the shredder display panel 217. An example of the panel display screen PG displayed on the shredder display panel 217 of the waste paper shredder 200 is illustrated in FIG. 10. A second panel display screen PG2, which is an example of the panel display screen PG, is illustrated in FIG. 10.

The second panel display screen PG2 shows cumulative hours of operation 507 and shredded weight 509. The shredded weight 509 includes cumulative shredded weight 509a, current month shredded weight 509b, and current year shredded weight 509c.

The cumulative hours of operation 507 represents the cumulative value of the hours of operation of the waste paper shredder 200. The cumulative hours of operation 507 is found by measuring the hours of operation of the shredding unit 221 by the shredder control unit 240. The cumulative hours of operation 507 is stored into the shredder storage unit 250.

The shredded weight 509 is the amount of the paper fragments C measured by the mass sensor 229. The cumulative shredded weight 509a represents the cumulative value of the amount of the paper fragments having been produced through shredding by the waste paper shredder 200. The current month shredded weight 509b represents the value of the amount of the paper fragments having been produced through shredding in this month. The current year shredded weight 509c represents the value of the amount of the paper fragments having been produced through shredding in this year.

Though the second panel display screen PG2 shows the cumulative hours of operation 507 and the shredded weight 509 such as the cumulative shredded weight 509a, this does not imply any limitation. Either the cumulative hours of operation 507 or the shredded weight 509 may be displayed on the second panel display screen PG2. At least one of the cumulative shredded weight 509a, the current month shredded weight 509b, or the current year shredded weight 509c may be displayed on the second panel display screen PG2.

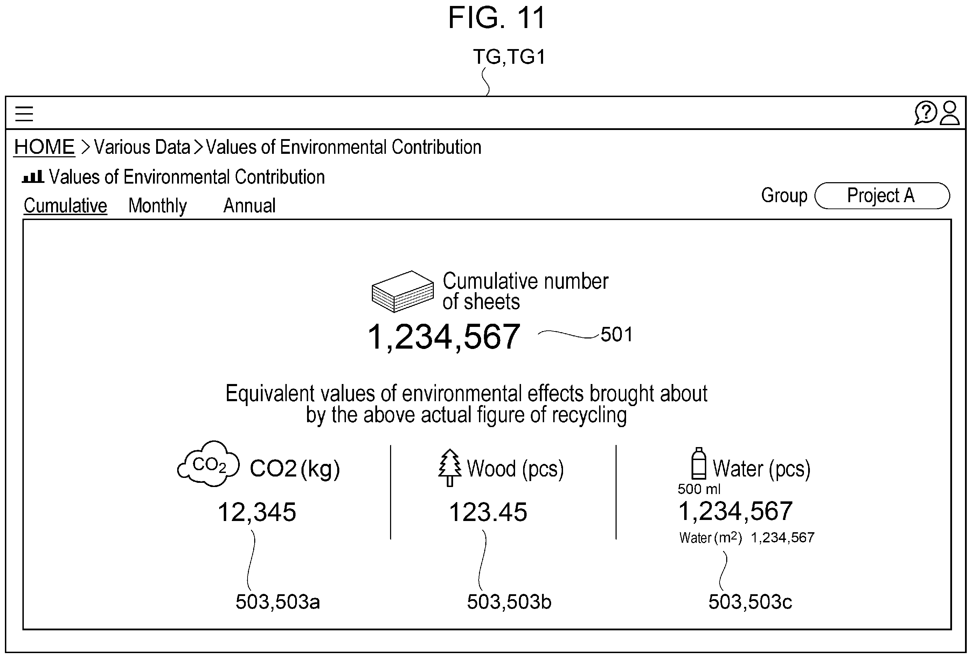

FIG. 11 is a diagram illustrating an example of display on the terminal display unit 420. An example of a terminal display screen TG displayed on the terminal display unit 420 of the terminal device 400 is illustrated in FIG. 11. A first terminal display screen TG1, which is an example of the terminal display screen TG, is illustrated in FIG. 11.

The first terminal display screen TG1 shows the cumulative number of sheets 501 and the environmental effect equivalent values 503. The environmental effect equivalent values 503 include the carbon dioxide equivalent value 503a, the wood equivalent value 503b, and the water equivalent value 503c. The cumulative number of sheets 501 and the environmental effect equivalent values 503 that are displayed on the first terminal display screen TG1 are the same as the cumulative number of sheets 501 and the environmental effect equivalent values 503 that are displayed on the first apparatus display screen AG1. By looking at the first terminal display screen TG1, the user of the terminal device 400 is able to confirm environmental improvement effects produced by the waste paper recycling system 1. At a site different from the site where the sheet manufacturing apparatus 100 or the waste paper shredder 200 is installed, the user of the terminal device 400 is able to confirm environmental improvement effects produced by the waste paper recycling system 1.

The waste paper recycling system 1 includes the terminal device 400 that is communicably connected to the waste paper recycling management server 300. The waste paper recycling management server 300 may transmit the notification information to the terminal device 400. The user of the terminal device 400 is able to remotely confirm an index that indicates a contribution to a reduction in environmental burdens that is achieved by the waste paper recycling system 1. The user of the terminal device 400 is able to remotely confirm the index that indicates a contribution to a reduction in environmental burdens that is achieved by at least one of the sheet manufacturing apparatus 100 or the waste paper shredder 200 in the waste paper recycling system 1.

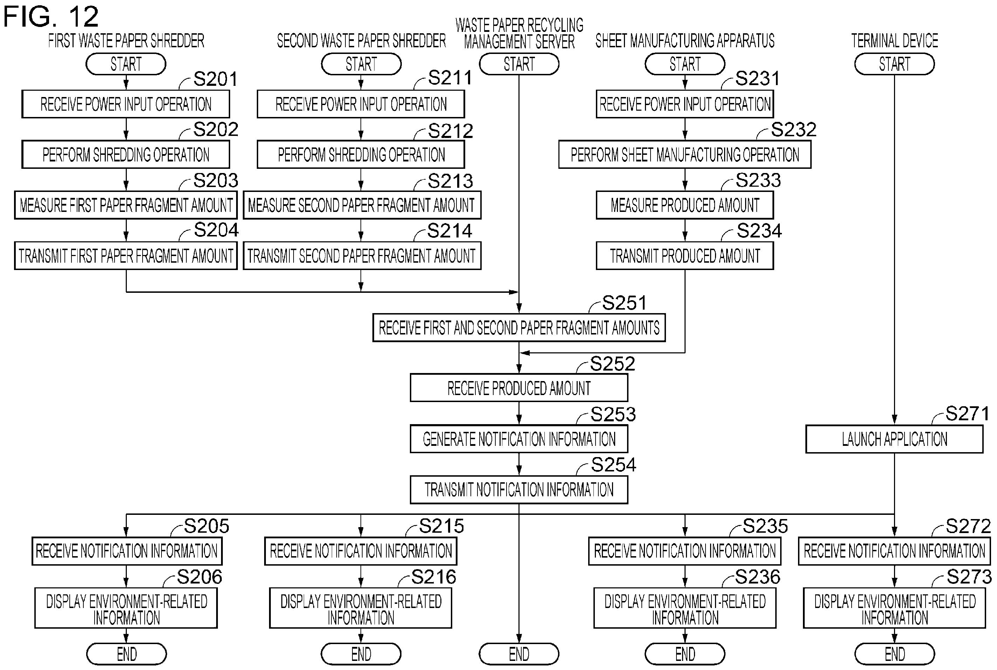

FIG. 12 is a diagram illustrating a control flow of the waste paper recycling system 1. In FIG. 12, a control flow of the waste paper recycling system 1 that includes a single sheet manufacturing apparatus 100, two waste paper shredders 200, the waste paper recycling management server 300, and a single terminal device 400 is illustrated. The two waste paper shredders 200 are, for example, the first waste paper shredder 200a and the second waste paper shredder 200b. The second waste paper shredder 200b corresponds to an example of a second shredder. The waste paper recycling system 1 manages environment-related information by executing the control flow.

In step S201, the first waste paper shredder 200a receives a power input operation. The first waste paper shredder 200a receives the power input operation when the user of the first waste paper shredder 200a performs an operation input on the power button 230. This puts the first waste paper shredder 200a into a state of being able to execute waste paper shredding.

After receiving the power input operation, in step S202, the first waste paper shredder 200a performs shredding operation. When the user of the first waste paper shredder 200a feeds waste paper into the paper feed port 215, the shredding unit 221 shreds the waste paper to produce the plurality of fragments of paper C. The fragments of paper C having been produced are contained in the container box 223.

After performing the shredding operation, in step S203, the first waste paper shredder 200a measures a first paper fragment amount. The first paper fragment amount is an example of a paper fragment amount. The mass sensor 229 measures the first paper fragment amount of the plurality of fragments of paper C contained in the container box 223 of the first waste paper shredder 200a. The mass sensor 229 measures the first paper fragment amount after the shredding unit 221 finishes the shredding operation. The mass sensor 229 may measure the first paper fragment amount while the shredding unit 221 is shredding the waste paper.

After measuring the first paper fragment amount, in step S204, the first waste paper shredder 200a transmits the first paper fragment amount to the waste paper recycling management server 300. The shredder communication unit 260 transmits the first paper fragment amount to the server communication unit 310 of the waste paper recycling management server 300 via the communication network NW. The first waste paper shredder 200a transmits the first paper fragment amount when the container box 223 becomes full. The fragments of paper C after the measurement of the first paper fragment amount are put into the collection bag G. The collection bag G is transported by the transportation service provider B to the first enterprise A1 that owns the sheet manufacturing apparatus 100.

In step S211, the second waste paper shredder 200b receives a power input operation. The second waste paper shredder 200b receives the power input operation when the user of the second waste paper shredder 200b performs an operation input on the power button 230. This puts the second waste paper shredder 200b into a state of being able to execute waste paper shredding.

After receiving the power input operation, in step S212, the second waste paper shredder 200b performs shredding operation. When the user of the second waste paper shredder 200b feeds waste paper into the paper feed port 215, the shredding unit 221 shreds the waste paper to produce the plurality of fragments of paper C. The fragments of paper C having been produced are contained in the container box 223.

After performing the shredding operation, in step S213, the second waste paper shredder 200b measures a second paper fragment amount. The mass sensor 229 measures the second paper fragment amount of the plurality of fragments of paper C contained in the container box 223 of the second waste paper shredder 200b. The mass sensor 229 measures the second paper fragment amount after the shredding unit 221 finishes the shredding operation. The mass sensor 229 may measure the second paper fragment amount while the shredding unit 221 is shredding the waste paper.

After measuring the second paper fragment amount, in step S214, the second waste paper shredder 200b transmits the second paper fragment amount to the waste paper recycling management server 300. The shredder communication unit 260 transmits the second paper fragment amount to the server communication unit 310 of the waste paper recycling management server 300 via the communication network NW. The second waste paper shredder 200b transmits the second paper fragment amount when the container box 223 becomes full. The fragments of paper C after the measurement of the second paper fragment amount are put into the collection bag G. The collection bag G is transported by the transportation service provider B to the first enterprise A1 that owns the sheet manufacturing apparatus 100.

In step S231, the sheet manufacturing apparatus 100 receives a power input operation. The sheet manufacturing apparatus 100 receives the power input operation when the user of the sheet manufacturing apparatus 100 performs an operation input on the power switch 111. This puts the sheet manufacturing apparatus 100 into a state of being able to manufacture the sheets P.

After receiving the power input operation, in step S232, the sheet manufacturing apparatus 100 performs sheet manufacturing operation. The fragments of paper C that were produced by the first waste paper shredder 200a and the second waste paper shredder 200b are fed as a raw material into the sheet manufacturing apparatus 100. The sheet manufacturing apparatus 100 recycles this input of the fragments of paper C into the sheets P.

After performing the sheet manufacturing operation, in step S233, the sheet manufacturing apparatus 100 measures the produced amount of the sheets P. The sheet counter 140 counts the number of the sheets P manufactured by the sheet manufacturing apparatus 100. By counting the number of the sheets P, the sheet manufacturing apparatus 100 measures the produced amount of the sheets P.

After measuring the produced amount of the sheets P, in step S234, the sheet manufacturing apparatus 100 transmits the produced amount to the waste paper recycling management server 300. The apparatus communication unit 150 transmits the produced amount to the server communication unit 310 of the waste paper recycling management server 300 via the communication network NW. The sheet manufacturing apparatus 100 transmits the produced amount to the waste paper recycling management server 300 at a predetermined timing. For example, at the timing of the finishing of the manufacturing of the sheets P, the sheet manufacturing apparatus 100 transmits the produced amount to the waste paper recycling management server 300.

In step S251, the waste paper recycling management server 300 receives the first paper fragment amount and the second paper fragment amount. When the first waste paper shredder 200a transmits the first paper fragment amount, the waste paper recycling management server 300 receives the first paper fragment amount. The waste paper recycling management server 300 receives, by means of the server communication unit 310, the first paper fragment amount transmitted from the first waste paper shredder 200a via the communication network NW. When the second waste paper shredder 200b transmits the second paper fragment amount, the waste paper recycling management server 300 receives the second paper fragment amount. The waste paper recycling management server 300 receives, by means of the server communication unit 310, the second paper fragment amount transmitted from the second waste paper shredder 200b via the communication network NW.

When the sheet manufacturing apparatus 100 transmits the produced amount, in step S252, the waste paper recycling management server 300 receives the produced amount of the sheets P. The waste paper recycling management server 300 receives, by means of the server communication unit 310, the produced amount transmitted from the sheet manufacturing apparatus 100 via the communication network NW.

After receiving the first paper fragment amount, the second paper fragment amount, and the produced amount, in step S253, the waste paper recycling management server 300 generates notification information. Based on at least one of the first paper fragment amount, the second paper fragment amount, or the produced amount, the server control unit 320 generates environment-related information. The environment-related information includes, for example, at least one of an amount of environmental contribution related to carbon dioxide, an amount of environmental contribution related to water, or an amount of environmental contribution related to wood by the sheet manufacturing apparatus 100. The environment-related information may include at least one of the amount of environmental contribution related to carbon dioxide, the amount of environmental contribution related to water, or the amount of environmental contribution related to wood by the first waste paper shredder 200a. The environment-related information may include at least one of the amount of environmental contribution related to carbon dioxide, the amount of environmental contribution related to water, or the amount of environmental contribution related to wood by the second waste paper shredder 200b. The server control unit 320 generates the notification information that includes the environment-related information.

The waste paper recycling management server 300 may calculate the contribution ratio of environmental contribution by the first waste paper shredder 200a and the contribution ratio of environmental contribution by the second waste paper shredder 200b. The data processing unit 321 of the server control unit 320 calculates a sum of the first paper fragment amount and the second paper fragment amount. The data processing unit 321 generates the contribution ratio of environmental contribution by the first waste paper shredder 200a by calculating the ratio of the first paper fragment amount to this sum amount. The data processing unit 321 generates the contribution ratio of environmental contribution by the second waste paper shredder 200b by calculating the ratio of the second paper fragment amount to this sum amount. Each of the contribution ratio of environmental contribution by the first waste paper shredder 200a and the contribution ratio of environmental contribution by the second waste paper shredder 200b corresponds to an example of a contribution ratio of the shredder.

After generating the notification information, in step S254, the waste paper recycling management server 300 transmits the notification information. The server communication unit 310 transmits the notification information to at least one of the first waste paper shredder 200a, the second waste paper shredder 200b, or the sheet manufacturing apparatus 100 via the communication network NW. The notification information may include the contribution ratio of environmental contribution by the first waste paper shredder 200a and the contribution ratio of environmental contribution by the second waste paper shredder 200b. The server communication unit 310 may transmit the notification information to the terminal communication unit 410 via the communication network NW.

When the waste paper recycling management server 300 transmits the notification information to the first waste paper shredder 200a, in step S205, the first waste paper shredder 200a receives the notification information. The shredder communication unit 260 of the first waste paper shredder 200a receives the notification information transmitted from the server communication unit 310 of the waste paper recycling management server 300 via the communication network NW. The notification information may include the contribution ratio of environmental contribution by the first waste paper shredder 200a and the contribution ratio of environmental contribution by the second waste paper shredder 200b.

After receiving the notification information, in step S206, the first waste paper shredder 200a displays the environment-related information. The shredder display panel 217 of the first waste paper shredder 200a displays the environment-related information included in the notification information. The shredder display panel 217 of the first waste paper shredder 200a may display the contribution ratio of environmental contribution by the first waste paper shredder 200a as the environment-related information.

When the waste paper recycling management server 300 transmits the notification information to the second waste paper shredder 200b, in step S215, the second waste paper shredder 200b receives the notification information. The shredder communication unit 260 of the second waste paper shredder 200b receives the notification information transmitted from the server communication unit 310 of the waste paper recycling management server 300 via the communication network NW. The notification information may include the contribution ratio of environmental contribution by the first waste paper shredder 200a and the contribution ratio of environmental contribution by the second waste paper shredder 200b.

After receiving the notification information, in step S216, the second waste paper shredder 200b displays the environment-related information. The shredder display panel 217 of the second waste paper shredder 200b displays the environment-related information included in the notification information. The shredder display panel 217 of the second waste paper shredder 200b may display the contribution ratio of environmental contribution by the second waste paper shredder 200b as the environment-related information.

When the waste paper recycling management server 300 transmits the notification information to the sheet manufacturing apparatus 100, in step S235, the sheet manufacturing apparatus 100 receives the notification information. The apparatus communication unit 150 receives the notification information transmitted from the server communication unit 310 of the waste paper recycling management server 300 via the communication network NW.

After receiving the notification information, in step S236, the sheet manufacturing apparatus 100 displays the environment-related information. The apparatus display 113 of the sheet manufacturing apparatus 100 displays the environment-related information included in the notification information.

In step S271, the terminal device 400 launches an application in advance. The terminal device 400 executes in advance the application that makes it possible to perform notification of the notification information. An application program for launching the application has been stored in the terminal storage unit 440 in advance.

When the waste paper recycling management server 300 transmits the notification information to the terminal device 400, in step S272, the terminal device 400 receives the notification information. The terminal communication unit 410 receives the notification information transmitted from the server communication unit 310 of the waste paper recycling management server 300 via the communication network NW. The notification information may include the contribution ratio of environmental contribution by the first waste paper shredder 200a and the contribution ratio of environmental contribution by the second waste paper shredder 200b.

After receiving the notification information, in step S273, the terminal device 400 displays the environment-related information. The terminal display unit 420 of the terminal device 400 displays the environment-related information included in the notification information. The terminal display unit 420 of the terminal device 400 may display at least one of the contribution ratio of environmental contribution by the first waste paper shredder 200a or the contribution ratio of environmental contribution by the second waste paper shredder 200b as the environment-related information.

The waste paper recycling system 1 includes the first waste paper shredder 200a and the second waste paper shredder 200b that shred waste paper. The second waste paper shredder 200b measures the second paper fragment amount of the paper fragments C produced when shredding waste paper, and transmits the second paper fragment amount to the waste paper recycling management server 300. The waste paper recycling management server 300 receives the first paper fragment amount transmitted from the first waste paper shredder 200a and the second paper fragment amount transmitted from the second waste paper shredder 200b, calculates a sum of the first paper fragment amount and the second paper fragment amount, generates the contribution ratio of environmental contribution by the first waste paper shredder 200a by calculating the ratio of the first paper fragment amount to this sum amount, and transmits this contribution ratio of environmental contribution to the first waste paper shredder 200a as the notification information. The user of the first waste paper shredder 200a is able to confirm how much the credit for the environmental contribution goes to the first waste paper shredder 200a in the waste paper recycling system 1.

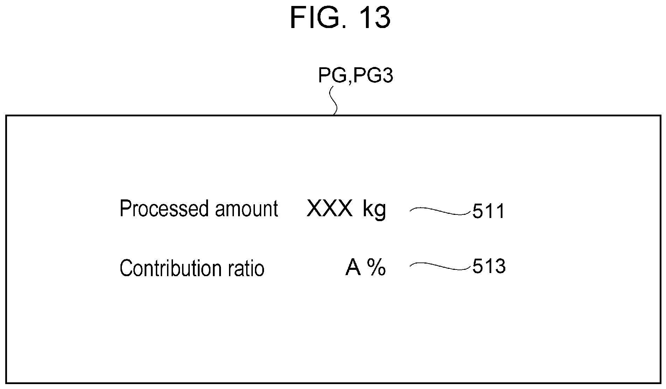

FIG. 13 is a diagram illustrating an example of display on the shredder display panel 217. An example of the panel display screen PG displayed on the shredder display panel 217 of the first waste paper shredder 200a is illustrated in FIG. 13. A third panel display screen PG3, which is an example of the panel display screen PG, is illustrated in FIG. 13.

A processed amount 511 and a contribution ratio 513 are displayed on the third panel display screen PG3. The third panel display screen PG3 shows, as the processed amount 511, the amount of the paper fragments C having been shred-produced by the shredding unit 221. The third panel display screen PG3 shows, as the contribution ratio 513, the contribution ratio of environmental contribution by the first waste paper shredder 200a. By looking at the third panel display screen PG3, the user of the first waste paper shredder 200a is able to confirm how much the environmental contribution by the first waste paper shredder 200a is.

The processed amount 511 may be the same value as the cumulative shredded weight 509a illustrated in FIG. 10 or a value different therefrom. Though the third panel display screen PG3 illustrated in FIG. 13 is displayed on the shredder display panel 217 of the first waste paper shredder 200a, this does not imply any limitation. The third panel display screen PG3 may be displayed on the shredder display panel 217 of the second waste paper shredder 200b. When the shredder display panel 217 of the second waste paper shredder 200b displays the third panel display screen PG3, the third panel display screen PG3 shows the processed amount 511 and the like of the second waste paper shredder 200b.

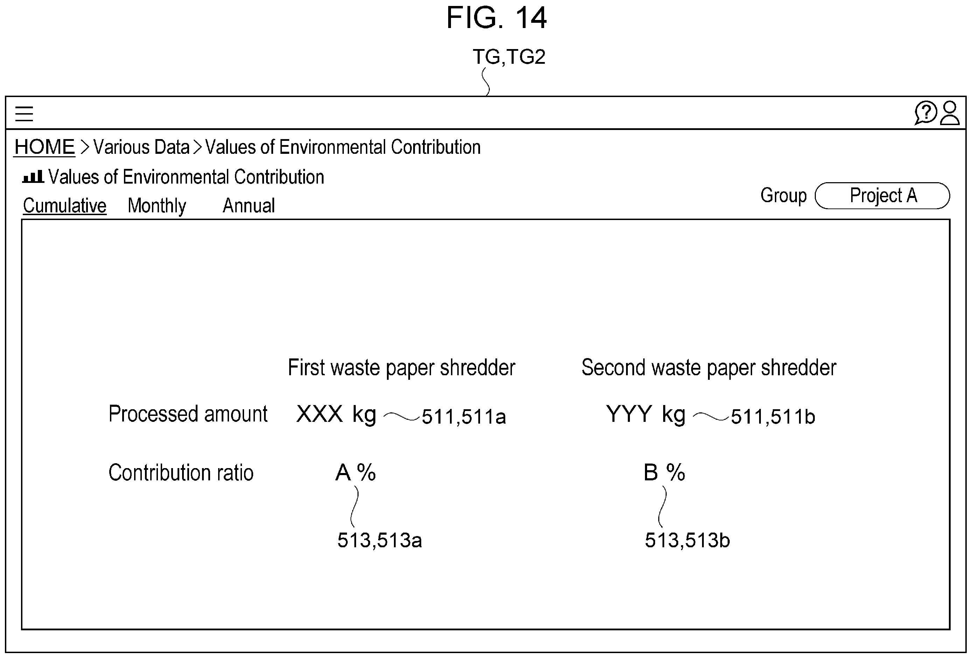

FIG. 14 is a diagram illustrating an example of display on the terminal display unit 420. An example of the terminal display screen TG displayed on the terminal display unit 420 of the terminal device 400 is illustrated in FIG. 14. A second terminal display screen TG2, which is an example of the terminal display screen TG, is illustrated in FIG. 14.

The second terminal display screen TG2 shows the processed amount 511 and the contribution ratio 513. The second terminal display screen TG2 shows a first processed amount 511a and a first contribution ratio 513a of the first waste paper shredder 200a. The first processed amount 511a is an example of the processed amount 511. The first contribution ratio 513a is an example of the contribution ratio 513. The second terminal display screen TG2 shows a second processed amount 511b and a second contribution ratio 513b of the second waste paper shredder 200b. The second processed amount 511b is an example of the processed amount 511. The second contribution ratio 513b is an example of the contribution ratio 513.

The first processed amount 511a is the amount of the paper fragments C having been shred-produced by the shredding unit 221 of the first waste paper shredder 200a. The first processed amount 511a may be the same value as the cumulative shredded weight 509a illustrated in FIG. 10 or a value different therefrom. The first contribution ratio 513a is the contribution ratio of environmental contribution by the first waste paper shredder 200a.

The second processed amount 511b is the amount of the paper fragments C having been shred-produced by the shredding unit 221 of the second waste paper shredder 200b. The second processed amount 511b may be the same value as the cumulative shredded weight 509a illustrated in FIG. 10 or a value different therefrom. The second contribution ratio 513b is the contribution ratio of environmental contribution by the second waste paper shredder 200b.

By looking at the second terminal display screen TG2, the user of the terminal device 400 is able to confirm how much the credit for the environmental contribution goes to each of the first waste paper shredder 200a and the second waste paper shredder 200b in the waste paper recycling system 1.

## Claims

1. A method of managing waste paper recycling information in a waste paper recycling system, the waste paper recycling system including a management server, a waste paper recycling apparatus, and a shredder, the method comprising:
by the shredder,
measuring an amount of paper fragments produced when shredding waste paper, the amount being hereinafter referred to as paper fragment amount; and
transmitting the paper fragment amount to the management server;
by the waste paper recycling apparatus,
recycling the paper fragments produced by the shredder into each sheet;
measuring an amount of the sheets produced through the recycling, the amount being hereinafter referred to as produced amount; and
transmitting the produced amount of the sheets to the management server;
by the management server,
receiving the paper fragment amount and the produced amount;
based on at least one of the paper fragment amount or the produced amount, generating user notification information; and
transmitting the user notification information.

2. The method of managing the waste paper recycling information according to claim 1, wherein
the user notification information includes at least one of an amount of carbon dioxide reduction, an amount of water reduction, or an amount of wood reduction that is or are achieved through the recycled production of the sheets from the waste paper by the waste paper recycling apparatus.

3. The method of managing the waste paper recycling information according to claim 1, wherein
the waste paper recycling system further includes a second shredder that shreds the waste paper, the method further comprising:
by the second shredder,
measuring a second paper fragment amount that is an amount of the paper fragments produced when shredding the waste paper; and
transmitting the second paper fragment amount to the management server;
by the management server,
receiving the second paper fragment amount transmitted from the second shredder;
calculating a sum of the paper fragment amount and the second paper fragment amount;
generating a contribution ratio of the shredder by calculating a ratio of the paper fragment amount to the sum; and
transmitting, as the user notification information, the contribution ratio to the shredder.

4. The method of managing the waste paper recycling information according to claim 3, wherein
the shredder includes a display panel, and
the shredder receives the user notification information and causes the display panel to display the user notification information.

5. The method of managing the waste paper recycling information according to claim 1, wherein
the waste paper recycling apparatus includes a display,
the management server transmits the user notification information to the waste paper recycling apparatus, and
the waste paper recycling apparatus receives the user notification information transmitted from the management server and causes the display to display the user notification information.

6. The method of managing the waste paper recycling information according to claim 1, wherein
the waste paper recycling system further includes a communication terminal communicably connected to the management server, and
the management server transmits the user notification information to the communication terminal.

7. A waste paper recycling system, comprising:
a management server;
a waste paper recycling apparatus communicably connected to the management server via a network; and
a shredder connected to the management server via the network,
the shredder including,
a shredding unit that produces a plurality of paper fragments by shredding waste paper;
a measuring sensor that measures an amount of the plurality of paper fragments, the amount being hereinafter referred to as paper fragment amount; and
a first communication unit that transmits the paper fragment amount to the management server;
the waste paper recycling apparatus including,
a paper manufacturing unit that recycles the plurality of paper fragments produced by the shredder into each sheet;
a counter that measures a produced amount of the sheets; and
a second communication unit that transmits the produced amount to the management server;
the management server including,
a third communication unit that receives the paper fragment amount and the produced amount; and
a control unit that, based on at least one of the paper fragment amount or the produced amount, generates user notification information, wherein
the third communication unit transmits the user notification information to at least one of the first communication unit or the second communication unit.
